# EUROPÄISCHE PATENTSCHRIFT

(11) **EP 3 047 430 B1**
(45) Veröffentlichungstag und Bekanntmachung des Hinweises auf die Patenterteilung: **13.11.2019**
(21) Anmeldenummer: 14771545.2
(22) Anmeldetag: 17.09.2014
(51) Int. Cl.: G06K 19/073

(54) **WERT- ODER SICHERHEITSPRODUKT MIT MINDESTENS EINER INNENLIEGENDEN ELEKTRISCHEN SCHALTUNG**
VALUABLE PRODUCT OR SECURITY PRODUCT HAVING AT LEAST ONE INTERNAL ELECTRICAL CIRCUIT
PRODUIT DE VALEUR OU DE SÉCURITÉ RENFERMANT AU MOINS UN CIRCUIT ÉLECTRIQUE

(30) Priorität: 18.09.2013 DE 102013218755
(43) Veröffentlichungstag der Anmeldung: 27.07.2016
(73) Patentinhaber: Bundesdruckerei GmbH, 10969 Berlin (DE)
(72) Erfinder: PEINZE, Franziska, 12589 Berlin (DE); KULIKOVSKA, Olga, 14165 Berlin (DE); FISCHER, Jörg, 13053 Berlin (DE); TRÖLENBERG, Stefan, 15749 Mittenwalde OT Ragow (DE)
(74) Vertreter: Patentanwälte Bressel und Partner mbB
(86) Internationale Anmeldenummer: PCT/EP2014/069788
(87) Internationale Veröffentlichungsnummer: WO 2015/040056

(56) Entgegenhaltungen:
- DE-A1- 10 252 329
- DE-A1-102005 016 294
- DE-A1-102005 052 071

## Beschreibung

Die vorliegende Erfindung betrifft Wert- oder Sicherheitsprodukte, insbesondere Wert- oder Sicherheitsdokumente, mit mindestens einer innenliegenden elektrischen Schaltung. Ein derartiges Wert- oder Sicherheitsdokument kann beispielsweise ein Personaldokument, eine Scheckkarte oder ein für die Produktsicherung bestimmtes Wert- oder Sicherheitselement sein.

In DE 10 2005 030 628 A1 ist ein Sicherheitsdokument mit integriertem Schaltkreis und einem integrierten Anzeigeelement beschrieben. Das Anzeigeelement kann neben der visuellen Darstellung gleichzeitig als programmierbarer Speicher für das IC-Element verwendet werden. Hierzu werden Treiber-Schaltkreise benötigt. Der Treiber wird bidirektional ausgeführt. Nach der Programmierung kann vorgesehen sein, dass ein irreversibler Vorgang ausgelöst wird, der beispielsweise ein innenliegendes Verdrahtungselement hochohmig macht, unterbricht oder einen Kurzschluss verursacht, sodass eine nochmalige Programmierung und eine Änderung der eingeschriebenen Daten nicht mehr möglich ist. Hierzu kann der Treiber irreversibel verändert werden. Ein Personalisierungsvorgang kann auch durch Beaufschlagung mit einem Laserpuls oder mit lokal wirkenden elektrischen und magnetischen Feldern oder beispielsweise durch Auspolymerisieren vorbestimmter Elemente irreversibel festgeschrieben werden.

Aus DE 10 2005 052 071 A1 geht ferner ein Dokument mit einem elektronischen Gerät, beispielsweise einem Transponder hervor. Das Dokument hat eine vorgegebene Gültigkeit. Der Transponder ist so ausgebildet, dass er aufgrund eines allmählich ablaufenden physikalischen und/oder chemischen Prozesses in etwa zum Ende der Gültigkeit funktionsuntüchtig wird. In einer Ausführungsform beinhaltet der Transponder einen integrierten elektronischen Schaltkreis. Durch den während der Gültigkeit allmählich ablaufenden physikalischen und/oder chemischen Prozess werden ein oder mehrere der Komponenten des integrierten elektronischen Schaltkreises einer fortschreitenden Umwandlung unterzogen, sodass der Schaltkreis nach Ablauf der Gültigkeit zumindest teilweise funktionsuntüchtig wird. Alternativ kann der Transponder auch eine Antenne haben, die über eine Leiterbahn mit einer anderen Komponente des elektronischen Geräts verbunden ist und die aufgrund des allmählich ablaufenden Prozesses unterbrochen oder kurzgeschlossen wird. Beispielsweise können leitfähige Partikel vorgesehen sein, die durch ein elektrisches oder magnetisches Feld ausgerichtet werden. In noch einer weiteren Alternative kann die Leiterbahn aus einem intrinsisch leitfähigen Polymer gebildet sein, und durch allmähliche Polymerisation des Polymers wird dessen elektrische Leitfähigkeit herabgesetzt.

Aus DE 10 2011 116 488 A1 ist ein optisch variables Sicherheitselement mit mikroverkapselter Farbschicht mit einem Motivbereich in Form von Mustern, Zeichen oder einer Codierung bekannt. Das optisch variable Sicherheitselement zeigt betrachtungswinkelabhängige visuelle Effekte. Hierzu wird eine Druckfarbe bereitgestellt, die in einem Bindemittel eine Vielzahl von Mikrokapseln enthält, die jeweils eine semipermeable Kapselhülle aufweisen. Die Kapselhülle ist für vorbestimmte reaktive Substanzen durchlässig und weist eine eingeschlossene Trägerflüssigkeit und einen durch externe elektrische oder magnetische Felder beeinflussbaren Kapselinhalt auf, welcher in der Mikrokapsel frei beweglich ist. Nach dem Aufbringen der Druckfarbe auf einen Untergrund wird in dem Motivbereich eine Schicht mit den reaktiven Substanzen aufgebracht, welche durch die Kapselhüllen in die Mikrokapseln eindringen. In einem den Motivbereich enthaltenden Teilbereich der Farbschicht wird ein externes elektrisches oder magnetisches Feld angelegt, um dort den beweglichen Kapselinhalt zu beeinflussen. Beispielsweise kann die Ausrichtung oder Position von in den Mikrokapseln enthaltenen nicht-sphärischen Plättchen verändert werden. Die in die Mikrokapseln eingedrungenen reaktiven Substanzen werden ausgehärtet, um den Kapselinhalt in seiner beeinflussten Lage zu fixieren.

Es ist bekannt, Wert- oder Sicherheitsdokumente aus Verbundmaterialien, insbesondere aus Polymeren, herzustellen, beispielsweise mit einem Laminationsverfahren aus mehreren Lagen (DE 10 2007 018 450 A1). Zur Verhinderung oder zumindest Erschwerung der Fälschung oder Verfälschung von Wert- oder Sicherheitsdokumenten sind beispielsweise individualisierende, insbesondere personalisierende, Sicherheitsmerkmale in den Wert- oder Sicherheitsprodukten innenliegend angeordnet. Zur Verhinderung der Delamination wird beispielsweise vorgeschlagen, geeignete Materialien für den Verbund auszuwählen, um einen monolithischen Laminationskörper bilden zu können (DE 10 2007 052 947 A1).

Mit den vorstehenden Verfahren kann jedoch nicht verhindert werden, dass ein Fälscher einen Speicherchip in einem Wert- oder Sicherheitsdokument mit aufwändigen Methoden ausliest oder das den Chip enthaltende Wert- oder Sicherheitsdokument nachträglich manipuliert. Aus diesem Grunde besteht keine umfassende Sicherheit gegenüber einer Fälschung oder Verfälschung, zu deren Verwirklichung das Produkt beispielsweise zumindest teilweise gespalten, beispielsweise delaminiert, wird oder von der Außenseite am Wert- oder Sicherheitsprodukt mechanische oder andere Manipulationen vorgenommen werden, beispielsweise der Chip mit Werkzeugen oder durch Delamination des Produkts aufgrund von Wärmeeinwirkung freigelegt und lagenweise abgeschliffen oder entnommen wird. Von daher liegt der vorliegenden Erfindung die Aufgabe zugrunde, ein Wert- oder Sicherheitsprodukt zu schaffen, mit dem eine Manipulation einer elektrischen Schaltung in dem Produkt verhindert wird, indem die elektrische Schaltung bei dem manipulativen Eingriff deaktiviert wird. Die Herstellung von derartigen gegen eine Manipulation abgesicherten Wert- oder Sicherheitsprodukten soll darüber hinaus kostengünstig sein.

Soweit in der Beschreibung und in den Ansprüchen der vorliegenden Anmeldung der Begriff 'Wert- oder Sicherheitsprodukt', das insbesondere ein Wert- oder Sicherheitsdokument oder ein Sicherheitselement sein kann, verwendet wird, ist darunter beispielsweise ein Reisepass, Personalausweis, Führerschein, ein Zugangskontrollausweis oder eine andere ID-Karte, ein Fahrzeugschein, Fahrzeugbrief, Visum, Scheck, Zahlungsmittel, insbesondere eine Banknote, eine Scheck-, Bank-, Kredit- oder Barzahlungskarte, Kundenkarte, Gesundheitskarte, Chipkarte, ein Firmenausweis, Berechtigungsnachweis, Mitgliedsausweis, Geschenk- oder Einkaufsgutschein, Frachtbrief oder ein sonstiger Berechtigungsnachweis, Steuerzeichen, Postwertzeichen, Ticket, (Spiel-)Jeton oder ein anderes Dokument zu verstehen. Ein erfindungsgemäßes Produkt kann auch ein Sicherheitselement, beispielsweise ein Aufkleber, Haftetikett (beispielsweise zur Artikelsicherung) oder dergleichen, sein, das das erfindungsgemäße Sicherheitsmerkmal aufweist und das mit einem Vorprodukt eines Wert- oder Sicherheitsdokuments oder eines anderen Artikels, beispielsweise mit einem zu markierenden Produkt, dessen Echtheit zu garantieren ist, unlösbar verbunden werden kann, um das Wert- oder Sicherheitsdokument oder diesen markierten Artikel zu bilden. Dieser Artikel kann beispielsweise ein Exemplar aus einer limitierten Serie gleichartiger Produkte sein, dessen Einzigartigkeit mittels einer Nummerierung oder einer anderen individuellen Markierung dokumentiert wird. Diese Markierung kann durch die Individualisierung des mit dem Sicherheitsmerkmal versehenen Sicherheitselements realisiert werden. Das Wert- oder Sicherheitsprodukt kann beispielsweise auch eine Smartcard sein. Das Wert- oder Sicherheitsdokument kann im ID 1-, ID 2-, ID 3- oder in irgendeinem anderen normierten oder nicht normierten Format vorliegen, beispielsweise in Heftform, wie bei einem passähnlichen Gegenstand, oder beispielsweise in Kartenform. Ein Wert- oder Sicherheitsprodukt ist im Allgemeinen ein Laminat aus mehreren Produktlagen, die passergenau unter Wärmeeinwirkung und unter erhöhtem Druck flächig miteinander verbunden worden sind. Insbesondere können die Produktlagen Polymerlagen sein. Diese Produkte sollen den normierten Anforderungen genügen, beispielsweise gemäß ISO 10373, ISO/IEC 7810, ISO 14443. Die Produktlagen bestehen beispielsweise aus einem Trägermaterial, das sich für eine Lamination eignet.

Das Wert- oder Sicherheitsprodukt kann aus einem Polymer gebildet sein, das ausgewählt ist aus einer Gruppe, umfassend Polycarbonat (PC), insbesondere Bisphenol A-Polycarbonat, Polyethylenterephthalat (PET), deren Derivate, wie Glykol-modifiziertes PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-StyrolCopolymer (ABS) sowie deren Derivate, und/oder Papier und/oder Pappe und/oder Glas und/oder Metall und/oder Keramik. Außerdem kann das Produkt auch aus mehreren dieser Materialien hergestellt sein. Bevorzugt besteht es aus PC oder PC/TPU/PC. Die Polymere können entweder gefüllt oder ungefüllt vorliegen. Im letzteren Falle sind sie vorzugsweise transparent oder transluzent. Falls die Polymere gefüllt sind, sind sie opak. Die vorstehenden Angaben beziehen sich sowohl auf miteinander zu verbindende Folien als auch auf Flüssigformulierungen, die auf ein Vorprodukt aufgebracht werden, wie einen Schutz- oder Decklack. Bevorzugt wird das Produkt aus 3 bis 12, vorzugsweise 4 bis 10 Folien, hergestellt. Die Folien können ferner Druckschichten tragen. Ein solcherart gebildetes Laminat kann abschließend ein- oder beidseitig mit dem Schutz- oder Decklack oder mit einer Folie überzogen werden. Die Folie kann insbesondere ein Volumenhologramm, eine Folie mit einem Oberflächenhologramm (beispielsweise einem kinegraphischen Element) oder eine Kratzschutzfolie sein. Derart gebildete Overlaylagen schützen ein darunter angeordnetes Sicherheitsmerkmal und/oder verleihen dem Dokument die erforderliche Abriebfestigkeit.

Soweit in der Beschreibung und in den Ansprüchen ein Begriff im Singular genannt wird, beispielsweise 'erste chemische Substanz', 'zweite chemische Substanz', 'Schaltkreiselement', 'Leiterbahn', 'Chip' usw., ist der Begriff im jeweiligen Kontext gleichzeitig auch im Plural gemeint, also beispielsweise 'erste chemische Substanzen', 'zweite chemische Substanzen', 'Schaltkreiselemente', 'Leiterbahnen,' 'Chips' usw., sofern nicht ausdrücklich etwas anderes angegeben ist. Entsprechendes gilt auch im umgekehrten Falle.

Gemäß der vorliegenden Erfindung wird die vorstehend angegebene Aufgabe durch das Wert- oder Sicherheitsprodukt, das mindestens eine innenliegende elektrische Schaltung aufweist, gelöst. Die elektrische Schaltung in dem erfindungsgemäßen Wert- oder Sicherheitsprodukt ist durch mindestens ein Schaltkreiselement und mindestens eine mit dem mindestens einen Schaltkreiselement elektrisch verbundene Leiterbahn gebildet. Das Wert- oder Sicherheitsprodukt enthält ferner Kern/Hülle-Teilchen (Mikrokapseln), die mindestens eine erste chemische Substanz enthalten. Unter einer (ersten, zweiten, dritten) chemischen Substanz ist in der vorliegenden Anmeldung sowohl ein einheitlicher chemischer Stoff (chemische Verbindung) als auch eine Mischung mehrerer chemischer Stoffe zu verstehen. Die Kern/Hülle-Teilchen sind durch eine Hülle sowie durch einen von der Hülle umgebenen Kern gebildet. Die erste chemische Substanz kann sich entweder im Kern oder in der Hülle oder sowohl im Kern als auch in der Hülle befinden. Durch eine Einwirkung, insbesondere eine mechanische Einwirkung, auf das Wert- oder Sicherheitsprodukt wird die mindestens eine erste chemische Substanz freigesetzt. Alternativ kann die Einwirkung auch durch Einstrahlung von elektromagnetischer Strahlung, beispielsweise Licht- oder Wärmestrahlung, bewirkt werden. Durch die aufgrund der Einwirkung verursachte Beschädigung oder Zerstörung der Kern/Hülle-Teilchen kann die mindestens eine erste Substanz zu der mindestens einen elektrischen Schaltung gelangen und dort allein (erste Ausführungsvariante) oder nach einer Reaktion mit mindestens einer zweiten chemischen Substanz, die sich ebenfalls in dem Wert- oder Sicherheitsprodukt befindet und wobei sich mindestens eine dritte chemische Substanz bildet (zweite Ausführungsvariante), die elektrische Funktionsfähigkeit der elektrischen Schaltung beeinträchtigen oder sogar vollständig aufheben. Erfindungsgemäß wird ein elektrischer Kurzschluss in der elektrischen Schaltung verursacht.

Die Funktionalität der elektrischen Schaltung, die durch ein elektrisches Schaltkreiselement und eine Leiterbahn (oder jeweils mehrere davon) gebildet ist, wird erfindungsgemäß nur solange aufrechterhalten, wie kein elektrischer Kurzschluss zwischen Anschlusskontakten oder Kontaktstellen innerhalb der elektrischen Schaltung erzeugt worden ist. Falls eine Einwirkung, insbesondere eine mechanische Einwirkung, beispielsweise eine mechanische Manipulation an den Außenseiten des Wert- oder Sicherheitsproduktes, vorgenommen wird, zum Beispiel eine äußere Schutzlackschicht mit einem Werkzeug zumindest partiell entfernt wird, oder ein durch Laminieren erhaltenes Produkt durch Spalten delaminiert wird, um insbesondere an ein innenliegendes Schaltkreiselement zu gelangen, werden mechanische Spannungen in das Produkt eingetragen, und/oder das Produkt wird möglicherweise sogar zumindest lokal verformt. Durch diese mechanischen oder anderen

Einwirkungen werden die Kern/Hülle-Teilchen höchstwahrscheinlich beschädigt oder zerstört. Die Kern/Hülle-Teilchen befinden sich hierzu vorzugsweise in der Umgebung der Teile der elektrischen Schaltung, d.h. in einem Bereich, in dem sich auch die Anschlusskontakte der Leiterbahn zum Schaltkreiselement und/oder elektrische Verbindungsleitungen und/oder Kontaktstellen des Schaltkreiselements oder dergleichen befinden. Allerdings ist dies nicht unbedingt erforderlich. Beispielsweise können die Kern/Hülle-Teilchen auch in einem davon beabstandeten Bereich angeordnet sein, wenn sie die Möglichkeit haben, in den Bereich der Anschlusskontakte der Leiterbahn zum Schaltkreiselement und/oder der Kontaktstellen des Schaltkreiselements oder dergleichen zu gelangen. Dies ist beispielsweise dann möglich, wenn die in den Kern/Hülle-Teilchen enthaltene erste chemische Substanz und/oder die zweite chemische Substanz und/oder eine durch Reaktion dieser beiden chemischen Substanzen erhaltene dritte chemische Substanz zu den Anschlusskontakten der Leiterbahn und/oder Kontaktstellen des Schaltkreiselements oder dergleichen gelangen kann, etwa durch gegebenenfalls wärmeunterstützte Diffusion oder durch Fortbewegung auf andere Art und Weise, beispielsweise in eigens hierfür vorgesehenen Hohlräumen, insbesondere Kanälen, beispielsweise in Glasfaserkanälen oder in einer porösen Schicht. Durch die Erzeugung einer elektrisch leitfähigen Substanz im Bereich der Anschlusskontakte, Kontaktstellen oder dergleichen führt deren elektrische Verbindung untereinander zumindest zu einer Störung oder sogar zur Zerstörung des elektrischen Schaltkreiselements oder der Leiterbahn und jedenfalls zumindest zu einer Störung der Funktionsfähigkeit der elektrischen Schaltung. Falls die Möglichkeit besteht, dass die erste chemische Substanz und/oder die zweite chemische Substanz und/oder die dritte chemische Substanz zu den Anschlusskontakten, Kontaktstellen oder dergleichen gelangen kann, selbst wenn letztere von ersteren entfernt angeordnet sind, kann eine mechanische Einwirkung zum Zwecke der Manipulation des Wert- oder Sicherheitsproduktes nicht nur dann zum Ausfall der elektrischen Schaltung führen, wenn die Manipulation im Bereich der entstehenden Kurzschlussbrücke sondern an einer beliebigen anderen Stelle des Wert- oder Sicherheitsproduktes vorgenommen wird.

Der vorliegenden Erfindung liegt die Erkenntnis zugrunde, dass Kern/Hülle-Teilchen bei einer äußeren Einwirkung, insbesondere bei einer mechanischen Einwirkung, beschädigt oder sogar zerstört werden, indem die Hülle der Teilchen beschädigt oder zerstört wird, sodass sie beispielsweise bersten oder platzen. Dadurch gelangen die ersten chemischen Substanzen, die in den Kern/Hülle-Teilchen enthalten sind, nach außen und werden somit freigesetzt. Diese ersten chemischen Substanzen und gegebenenfalls dritten chemischen Substanzen beeinträchtigen die elektrische Funktionsfähigkeit der elektrischen Schaltung. Insbesondere erzeugen sie einen Kurzschluss, indem sie zu den Anschlusskontakten, Kontaktstellen oder dergleichen gelangen und dort eine Kurzschlussbrücke bilden. Daher führt eine der Manipulation dienende mechanische Einwirkung zur Bildung des Kurzschlusses und zum Außer-Kraft-Setzen der elektrischen Schaltung.

Eine mechanische Beeinflussung der Kern/Hülle-Teilchen kann beispielsweise durch einen manipulativen Eingriff mit Werkzeugen insbesondere an der Oberfläche des Wert- oder Sicherheitsproduktes stattfinden. Auch durch eine Delamination (Spaltung), d.h. ein Auseinanderziehen von miteinander verbundenen Produktlagen, werden mechanische Spannungen im Produktmaterial erzeugt, die zu der Beschädigung oder Zerstörung der Kern/Hülle-Teilchen führen. Desgleichen kann auch beispielsweise eine Wärmebehandlung zu einer Beschädigung oder Zerstörung der Kern/Hülle-Teilchen führen.

In einer bevorzugten Weiterbildung der vorliegenden Erfindung befindet sich die mindestens eine erste chemische Substanz im Kern der Kern/Hülle-Teilchen. Wenn die Hülle beispielsweise aufgrund einer mechanischen Beaufschlagung des Wert- oder Sicherheitsproduktes beschädigt oder zerstört wird, wird der Kerninhalt freigesetzt, sodass die erste chemische Substanz in die jeweilige Umgebung der Kern/Hülle-Teilchen gelangt.

In einer ersten Ausführungsvariante der vorliegenden Erfindung enthalten die Kern/Hülle-Teilchen elektrisch leitfähiges Material als erste chemische Substanz. Dieses Material wird bei einer beispielsweise mechanischen Einwirkung auf das Wert- oder Sicherheitsprodukt freigesetzt, weil die Kern/Hülle-Teilchen beschädigt oder zerstört werden, und gelangt zu den Anschlusskontakten, Kontaktstellen oder dergleichen. Aufgrund ihrer hohen elektrischen Leitfähigkeit erzeugen sie dort eine Kurzschlussbrücke, die die Funktionsfähigkeit der elektrischen Schaltung beeinträchtigt oder beseitigt.

In einer zweiten Ausführungsvariante der vorliegenden Erfindung enthalten die Kern/Hülle-Teilchen die mindestens eine erste chemische Substanz. Allerdings weist die Substanz in dieser Ausführungsvariante keine ausreichende elektrische Leitfähigkeit für die Herstellung einer Kurzschlussbrücke auf. Jedoch ist zusätzlich in der Umgebung der Kern/Hülle-Teilchen mindestens eine zweite chemische Substanz angeordnet, zu der die erste chemische Substanz aufgrund der Freisetzung gelangt und mit der die erste chemische Substanz zu einer dritten chemischen Substanz reagieren kann, beispielsweise in einer Redoxreaktion. Die dritte chemische Substanz weist die für die Erzeugung einer Kurzschlussbrücke erforderliche hohe elektrische Leitfähigkeit auf. Der Volumenbereich, in dem sich die Kern/Hülle-Teilchen befinden, liegt vorzugsweise unmittelbar benachbart zu dem Volumenbereich in dem Wert- oder Sicherheitsprodukt, in dem sich die zweite chemische Substanz befindet ('Umgebung' der Kern/Hülle-Teilchen). Die beiden Volumenbereiche können sich auch überlagern oder identisch sein. Beispielsweise kann der Volumenbereich, der die Kern/Hülle-Teilchen enthält, auch die zweite chemische Substanz enthalten. Falls die beiden Volumenbereiche nicht unmittelbar zueinander benachbart angeordnet sind, muss gewährleistet sein, dass die erste chemische Substanz zu der zweiten chemischen Substanz gelangen kann. Wie zuvor erläutert, kann dies durch Diffusion oder eine andere Transportmöglichkeit gewährleistet sein.

In einer ersten Ausführungsform der ersten Ausführungsvariante ist die mindestens eine erste chemische Substanz durch eine Metallpartikel enthaltende Flüssigkeit oder pastöse Masse gebildet. Derartige Flüssigkeiten oder pastöse Massen sind als Leitfarben oder Leitpasten bekannt. Die darin enthaltenen Metallpartikel liegen vorzugsweise als Plättchen oder Nadeln vor, deren Dicke bzw. Nadeldurchmesser im Mikrometerbereich oder darunter, vorzugsweise im Bereich von 0,01 bis 1 µm, weiter bevorzugt von 0,02 bis 0,2 µm und am meisten bevorzugt von 0,05 bis 0,1 µm, liegt. Die Größendimension in Längserstreckung, d.h. parallel zur Plättchenebene oder Nadellänge, beträgt vorzugsweise von 0,1 bis 10 µm, vorzugsweise von 0,2 bis 2 µm und ganz besonders bevorzugt von 0,5 bis 1 µm. Das Metall kann insbesondere ausgewählt sein aus der Gruppe, umfassend Kupfer, Silber, Gold, Eisen und Nickel. Die Flüssigkeit enthält zusätzlich zu einem Lösemittel, beispielsweise einem Alkohol/Wasser-Gemisch, typischerweise ein oberflächenaktives Mittel zum Dispergieren der Partikel.

In einer zweiten Ausführungsform der ersten Ausführungsvariante ist die mindestens eine erste chemische Substanz durch eine ionische Flüssigkeit gebildet. Diese Substanz ist elektrisch leitfähig und erzeugt die Kurzschlussbrücke, sobald sie durch die mechanische Einwirkung freigesetzt ist und zu den Anschlusskontakten, Kontaktstellen oder dergleichen der elektrischen Schaltung gelangt. Derartige Flüssigkeiten sind in Kern/Hülle-Teilchen gut einbaubar.

Ionische Flüssigkeiten sind organische Salze, die bei Temperaturen unter 100°C flüssig sind, ohne dass sie in einem Lösungsmittel wie Wasser gelöst sind. Beispiele für verwendete Kationen der Salze sind das Imidazolium-, Pyridinium-, Pyrrolidinium-, Guanidinium-, Thiouronium-, Piperidinium-, Morpholinium-, organische Ammonium- und organische Phosphonium-Kation. Diese Kationen können insbesondere alkyliert oder anders substituiert sein. Als Anionen kommen Halogenide und komplexere Ionen, wie das Tetrafluoroborat-, Trifluoracetat-, Trifluormethansulfonat-, Hexafluorophosphat-Anion in Frage. Ionische Flüssigkeiten haben einen sehr niedrigen Dampfdruck und weisen eine hohe elektrische Leitfähigkeit auf. Daher eignen sie sich für den erfindungsgemäßen Zweck hervorragend, denn anders als Wasser können diese Flüssigkeiten nicht einfach durch Erwärmen des Wert- oder Sicherheitsproduktes aus diesem wieder ausgetrieben werden. Diese Flüssigkeiten werden vorzugsweise rein eingesetzt, d.h. beispielsweise nicht in einem Lösemittel gelöst. Ionische Flüssigkeiten sind im Handel erhältlich.

In einer dritten Ausführungsform der ersten Ausführungsvariante kann die erste chemische Substanz auch durch ein intrinsisch leitfähiges Polymer gebildet sein, beispielsweise durch ein Polyanilin. Derartige Polymere liegen in einer Salzform vor. Das Polymer bildet ein Kation. Das Anion des Salzes kann beispielsweise durch ein p-Toluolsulfonat-Anion gebildet sein. Polyanilin ist beispielsweise unter dem Warennamen ORMECON (Marke von Enthone Inc.) im Handel erhältlich.

In einer vierten Ausführungsform der ersten Ausführungsvariante ist die mindestens eine erste chemische Substanz durch in einer Flüssigkeit dispergierte Kohlenstoffnanoröhren (CNT: carbon nano tubes) gebildet. Derartige Substanzen gibt es in vielfältiger Form beispielsweise als einwandige CNT (SWCNT: single wall carbon nano tubes), doppelwandige CNT (DWCNT: double wall carbon nano tubes) und mehrwandige CNT (MWCNT (multi wall carbon nano tubes). Diese Materialien sind im Handel erhältlich. Die CNT weisen eine gute elektrische Leitfähigkeit auf. Die CNT befinden sich vorzugsweise in einer Flüssigkeit gelöst bzw. dispergiert (Lösemittel, Dispergiermittel), damit sie nach dem Freisetzen aus den Kern/Hülle-Teilchen zu der elektrischen Schaltung gelangen können, um dort eine Kurzschlussbrücke zu bilden.

In einer fünften Ausführungsform der ersten Ausführungsvariante ist die mindestens eine erste chemische Substanz durch einen in Wasser oder in einem anderen polaren Lösemittel gelösten Elektrolyt gebildet. Der Elektrolyt kann jede in Ionen dissoziierbare Substanz sein, typischerweise ein Salz, wie Natriumchlorid oder Lithiumformiat.

In einer ersten Ausführungsform der zweiten Ausführungsvariante der vorliegenden Erfindung ist die mindestens eine erste chemische Substanz durch eine heterocyclische aromatische Verbindung gebildet. In diesem Falle befindet sich in einem die Kern/Hülle-Teilchen umgebenden Materialbereich des Wert- oder Sicherheitsproduktes, vorzugsweise in einem Materialbereich, in den die Kern/Hülle-Teilchen eingebettet sind, mindestens ein Oxidationsmittel für die heterocyclische aromatische Verbindung als zweite chemische Substanz. Die zweite chemische Substanz kann sich auch in einem Volumenbereich im Wert- oder Sicherheitsprodukt befinden, der zu dem Volumenbereich beabstandet ist, in dem sich die Kern/Hülle-Teilchen befinden. Die heterocyclische aromatische Verbindung wird bei beispielsweise mechanischer Einwirkung auf das Wert- oder Sicherheitsprodukt aus den Kern/Hülle-Teilchen freigesetzt und gelangt zu dem Oxidationsmittel. Die heterocyclische Verbindung reagiert mit dem Oxidationsmittel und wird durch Oxidation polymerisiert. Dabei entsteht ein intrinsisch leitfähiges Polymer. Dieses leitfähige Polymer ist wiederum in der Lage, eine Kurzschlussbrücke an den Anschlusskontakten, Kontaktstellen oder dergleichen der elektrischen Schaltung zu bilden.

In einer bevorzugten Weiterbildung dieser ersten Ausführungsform der zweiten Ausführungsvariante ist die heterocyclische aromatische Verbindung ausgewählt aus der Gruppe, umfassend Pyrrol, Thiophen und deren Derivate. Das mindestens eine Oxidationsmittel für die heterocyclische Verbindung ist bevorzugt ein Übergangsmetallsalz in einer Oxidationsstufe, das zu einer niedrigeren Oxidationsstufe reduzierbar ist. Unter einem Übergangsmetall ist in dieser Anmeldung ein Element des Periodensystems der Elemente in den Gruppen 3 bis 12 zu verstehen, d.h. insbesondere Elemente mit den Ordnungszahlen 21-30, 39-48 und 57-80. Beispielsweise können die aromatische Verbindung Pyrrol und das Oxidationsmittel FeCl₃ (Eisen(III)chlorid) oder MnO₂ (Braunstein) sein. In einer besonderen Weiterbildung kann die aromatische Verbindung auch ein 3,4-Alkylendioxythiophen sein, insbesondere beispielsweise 3,4-Ethylendioxythiophen, die zusammen mit Polystyrolsulfonsäure in den Kern/Hülle-Teilchen enthalten ist. Durch Reaktion des Thiophen-Derivats beispielsweise in Gegenwart der Säure mit Braunstein entsteht ein elektrisch leitfähiges Polythiophen. Alternative Thiophen-Derivate und deren Herstellung sind in DE 42 02 337 A1 und DE 38 43 412 A1 angegeben.

In einer zweiten Ausführungsform der zweiten Ausführungsvariante ist die mindestens eine erste chemische Substanz durch eine Lösung gebildet, die zu Metall reduzierbare Metallionen enthält. Und die zweite chemische Substanz, die sich in einem zu den Kern/Hülle-Teilchen benachbarten oder in demselben Materialbereich des Wert- oder Sicherheitsproduktes befindet, ist durch mindestens ein Reduktionsmittel für die Metallionen gebildet. Durch die mechanische Einwirkung auf das Wert- oder Sicherheitsprodukt wird die die Metallionen enthaltende Lösung freigesetzt und gelangt in den umgebenden oder benachbarten Materialbereich, in dem sich das Reduktionsmittel für die Metallionen befindet. Durch Reaktion der Metallionen mit dem Reduktionsmittel wird das Metall gebildet, das die elektrische Kurzschlussbrücke erzeugt. Zumindest das Reduktionsmittel befindet sich vorzugsweise unmittelbar benachbart zu den Anschlusskontakten, Kontaktstellen oder dergleichen der elektrischen Schaltung.

In einer bevorzugten Weiterbildung dieser Ausführungsform der zweiten Ausführungsvariante sind die Metallionen Silberionen. Das Reduktionsmittel kann in diesem Falle ein Kohlenhydrat (Zucker), insbesondere ein Oligosaccharid, ganz besonders ein Mono- oder Disaccharid, beispielsweise Saccharose, sein. Durch die Reaktion der Silberionen mit dem Oligosaccharid bildet sich elementares Silber. Dieses weist eine hervorragende elektrische Leitfähigkeit auf und bildet daher eine Kurzschlussbrücke. Alternativ können auch andere zu Metall reduzierbare Metallionen eingesetzt werden, wie Gold und Kupfer. Kupfer kann beispielsweise mit Formaldehyd reduziert werden, wenn die Kupferionen beispielsweise mit EDTA komplexiert in einer hoch alkalischen Lösung (beispielsweise pH 13,0) vorliegen. Formaldehyd kann beispielsweise in Form von Paraformaldehyd vorliegen.

Es ist bevorzugt, dass die Substanz, die die Kurzschlussbrücke verursacht, entweder die erste chemische Substanz oder die durch chemische Umsetzung gebildete dritte chemische Substanz, nicht flüchtig ist, um zu verhindern, dass die Kurzschlussbrücke einfach durch Austreiben dieser Substanz wieder beseitigt werden kann. Hierzu kann die Substanz beispielsweise eine Flüssigkeit sein, wie eine ionische Flüssigkeit, die einen niedrigeren Dampfdruck als Wasser aufweist, oder ein Feststoff.

Damit die sich in den Kern/Hülle-Teilchen befindenden ersten chemischen Substanzen und gegebenenfalls ferner vorliegenden zweiten chemischen Substanzen zu den Anschlusskontakten, Kontaktstellen oder dergleichen der elektrischen Schaltung gelangen können, sodass sie dort die Kurzschlussbrücke bilden können, befinden sich die Kern/Hülle-Teilchen vorzugsweise in einem Volumenelement, vorzugsweise in einer Schicht, in dem Wert- oder Sicherheitsprodukt, das benachbart zu und überlappend mit den elektrischen Kontaktverbindungen zwischen dem mindestens einen Schaltkreiselement und der mindestens einen Leiterbahn in dem Wert- oder Sicherheitsprodukt angeordnet ist.

Das Volumenelement mit den Kern/Hülle-Teilchen kann bevorzugt auf mindestens einer Oberfläche oder im Inneren einer porösen Schicht gebildet sein, sodass die chemischen Substanzen zu den Anschlusskontakten, Kontaktstellen oder dergleichen der elektrischen Schaltung gelangen können. Diese poröse Schicht ist innerhalb des Wert- oder Sicherheitsproduktes vorzugsweise direkt an die Anschlusskontakte, Kontaktstellen oder dergleichen anliegend angeordnet. Beispielsweise kann die poröse Schicht durch eine direkt auf der Leiterbahn liegend angeordnete Ausgleichslage (mit einer Durchbrechung zur Aufnahme eines Schaltkreiselements) gebildet sein. Die poröse Schicht kann beispielsweise durch ein Vlies oder Gewebe, beispielsweise Papier oder ein anderes bei der Herstellung des Wert- oder Sicherheitsproduktes die Vlies- oder Gewebestruktur nicht einbüßendes Material, gebildet sein.

In einer bevorzugten Weiterbildung der vorliegenden Erfindung ist das elektrische Schaltkreiselement ein Halbleiterchip. Der Halbleiterchip kann gehäust oder ungehäust sein. Im Falle eines gehäusten Chips kann es sich um ein Surface Mount Device (SMD) handeln. Im Falle eines ungehäusten Chips kann es sich beispielsweise um einen Flip-Chip handeln. Bevorzugt ist der Halbleiterchip ein Bare Die in Form eines Flip-Chip-Bauteils. Der Chip kann aber auch ein Wafer Level CSP (WL-CSP, Chip Size Package) oder ein klassisches CSP als Alternative zu einem Flip-Chip sein. Unter einem Flip-Chip ist insbesondere ein Chip zu verstehen, der mit seinen Kontaktstellen nach unten kontaktiert wird. Unter einem Bare Die ist insbesondere ein ungehäuster Chip zu verstehen. Und unter einem Chip Size-Package (CSP) ist ein gehäuster Chip zu verstehen. In letzterem Falle ist das Gehäuse nicht wesentlich größer als der Chip selbst. Unter wafer level-CSP sind insbesondere Techniken zu verstehen, durch die Kontaktierungs- und Schutzmaßnahmen für einen Chip angewendet werden, solange sich dieser noch auf dem Wafer befindet.

Das Schaltkreiselement, insbesondere der Chip, ist in einer bevorzugten Weiterbildung der vorliegenden Erfindung mittels Flip-Chip-Klebetechnik in das Wert- oder Sicherheitsprodukt eingebracht und mit der Leiterbahn, insbesondere der Antenne, verbunden. Beispielsweise wird der integrierte Schaltkreis über einen anisotrop leitfähigen Kleber mit der Antenne elektrisch und mechanisch verbunden. Unter einem anisotrop leitfähigen Kleber ist ein Kleber zu verstehen, dessen elektrische Leitfähigkeit eine Vorzugsrichtung aufweist. Der anisotrop leitfähige Kleber (Anisotropic Conductive Adhesive - ACA) kann als Paste (Anisotropic Conductive Paste - ACP) oder als Film (Anisotropic Conductive Film - ACF) aufgebracht werden. Es kann aber auch ein nicht leitender Kleber (NCF) oder kein Kleber eingesetzt werden. Als besonders vorteilhaft hat sich die Beaufschlagung der Kontakthöcker (bumps) eines Flip-Chips mit Druck bei erhöhter Temperatur kombiniert mit Klebebonden mit einem ACA oder ACF für das Bonding des Flip-Chips herausgestellt. Beispielsweise kann der anisotrop leitfähige Kleber so ausgebildet sein, dass er in etwa räumlich gleichmäßig verteilt elektrisch leitfähige Partikel enthält. Durch die Aufbringung von Druck auf die Klebefläche entsteht die Anisotropie der elektrischen Leitfähigkeit.

Die Leiterbahn ist durch eine elektrisch leitfähige langgestreckte Einrichtung gebildet und kann beispielsweise in Form eines Drahtes, einer Metallschicht oder einer Schicht aus einer Leitpaste oder Leitfarbe gebildet sein. Vorzugsweise wird die Leiterbahn mittels der Leitpaste oder -farbe mit einem Druckverfahren hergestellt.

Erfindungsgemäß ist die elektrische Leiterbahn als Antenne ausgebildet. Der integrierte Schaltkreis bildet mit der Antenne einen RFID (radio-frequency identification)-Schaltkreis. Dieser ist dazu befähigt, mit einem Transponder (Sende- und Empfangsgerät für elektromagnetische Strahlung im Radiowellenbereich) zu kommunizieren. Mittels des RFID-Schaltkreises können Daten zwischen dem Schaltkreiselement und dem Transponder berührungslos ausgetauscht werden. Die Antenne ist als spiralförmige Antenne ausgebildet.

Gemäß einer besonders bevorzugten Ausführungsform der Erfindung handelt es sich bei dem Chip um einen Flip-Chip, der insbesondere mittels eines kollabierten Lots mit der Antenne, beispielsweise über Kontaktierungsstellen (Anschlusskontakten), elektrisch kontaktiert ist. Der Chip hat gemäß der vorliegenden Erfindung je eine Kontaktstelle zur Kontaktierung an Anschlusskontakten an der inneren und an der äußeren Windung. Der Chip ist brückenartig über die Spiralwindungen der Antenne aufgesetzt, sodass eine erste Kontaktstelle des Chips mit einem ersten Anschlusskontakt der Antenne und eine zweite Kontaktstelle des Chips mit einem zweiten Anschlusskontakt der Antenne verbunden sind. Für die Kontaktierung können an sich bekannte Bondingtechniken eingesetzt werden. In einer möglichen Ausführungsform wird der Chip durch ein Lot, beispielsweise einen sogenannten solder bump, insbesondere ein kollabiertes Lot, wie zum Beispiel einen kollabierten Solder Bump kontaktiert. Unter einem Bump (Kontakthöcker) ist eine Kontaktstelle für eine elektronische Komponente insbesondere eines Chips zu verstehen. Der Bump kann zum Beispiel mittels eines ACF und/oder durch Erwärmung des Lots elektrisch kontaktiert werden, sodass eine Lötstelle entsteht. Bei der Erwärmung des Lots kann dieses, je nach Bonding-Verfahren und in Abhängigkeit von der Temperatur, auf die die Kontaktstelle aufgeheizt wird, plastisch verformt werden, nur an seiner Oberfläche schmelzen oder vollständig schmelzen. Insbesondere im letzteren Fall spricht man auch von einem Solder Bump. Unter einem kollabierten Lot ist insbesondere eine Kontaktstelle zu verstehen, die beim Bonding plastisch verformt wird und an ihrer Oberfläche angeschmolzen oder vollständig geschmolzen ist. Insbesondere kann die elektrische Kontaktierung zwischen den Kontaktierungselementen der Antenne und den Kontaktstellen des Chips jeweils durch kollabiertes Lot, insbesondere eine Controlled Collapse Chip Connection (C4), hergestellt werden, d.h. durch kollabierte Solder Bumps. In einer vorteilhaften Weiterbildung der vorliegenden Erfindung wird der Chip mittels eines anisotrop leitfähigen Klebers mit der Leiterbahn elektrisch und mechanisch verbunden. Gemäß einer besonders vorteilhaften Weiterbildung wird die Kontaktierung sowohl mit einem anisotrop leitfähigen Kleber als auch mit einem kollabierten Lot durchgeführt, welches von dem anisotrop leitfähigen Kleber umgeben ist. Durch die Kombination dieser Kontaktierungstechniken resultiert ein besonders geringer Übergangswiderstand bei sehr guten mechanischen Eigenschaften. Gemäß einer alternativen Weiterbildung der vorliegenden Erfindung werden Au, oder Pd, Ni/Au Bumps ohne Lot eingesetzt. Diese werden vorzugsweise nicht aufgeschmolzen. Stattdessen wird die Kontaktierung durch einen ACA hergestellt. Dies hat den Vorteil, dass bei einer relativ geringen Temperatur gearbeitet kann, so dass ein Kunststoff mit einer entsprechend geringen Schmelztemperatur verwendet werden kann. Der mit Bumps versehene ungehäuste Chip kann entweder in Flip-Chip-Technik auf eine vorhandene Leiterbahn aufgesetzt und mit dieser verbunden werden. Oder der Chip wird in eine Vertiefung in dem Material des Wert- oder Sicherheitsproduktes eingesetzt, sodass dessen mit Bumps versehene Kontaktseite nach oben weist und mit der Oberseite des Materials bündig abschließt, und dann wird die Leiterbahn auf die Oberseite des Materials und die Kontaktseite des Chips gedruckt.

Die elektrische Schaltung, insbesondere die RFID-Schaltung mit einem RFID-Chip und mit einer mit dem Chip verbundenen Antenne, kann zunächst auf einer Trägerlage, insbesondere einer Polymerlage, hergestellt werden, indem die Antenne auf die Lage beispielsweise aufgedruckt und der Chip dann auf der Antenne elektrisch montiert wird. Dieses Inlay wird zusammen mit anderen Lagen zu einem Stapel zusammengeführt. Dann wird der Stapel durch Laminieren zu einem Laminat verbunden.

Besonders vorteilhaft ist es, eine elektrische Kurzschlussbrücke zwischen den beiden Anschlusskontakten der Leiterbahn, beispielsweise der Antenne, und/oder zwischen den beiden Kontaktstellen des Schaltkreiselements, beispielsweise des Halbleiterchips, zu bilden. Hierzu kann ein Materialbereich, insbesondere eine Schicht, gebildet werden, der sich in einem Volumenbereich unmittelbar angrenzend an die Anschlusskontakte der Leiterbahn und/oder an die Kontaktstellen des Schaltkreiselements befindet. Diese Schicht enthält die Kern/Hülle-Teilchen sowie gegebenenfalls die mindestens eine zweite chemische Substanz.

Die Kern/Hülle-Teilchen sind in das manipulationsabgesicherte Wert- oder Sicherheitsprodukt in einer vorzugsweise flächigen (zweidimensionalen) Anordnung eingebracht. Beispielsweise können sie auf die Oberfläche des Produktes aufgebracht sein. Alternativ oder zusätzlich können sie sich unter einer Schutzlackschicht des Produktes befinden, vorzugsweise unmittelbar unterhalb einer außenliegenden Schutzlackschicht und an diese angrenzend, und dort flächig verteilt vorliegen. Falls das Wert- oder Sicherheitsprodukt durch Lamination von mindestens zwei zu einem Stapel zusammengetragenen Produktlagen gebildet ist, können sich die Kern/Hülle-Teilchen alternativ oder zusätzlich in mindestens einer Kontaktebene zwischen zwei aneinander angrenzenden Produktlagen befinden. Vorzugsweise sind die Kern/Hülle-Teilchen innenliegend im Produkt angeordnet, sodass sie zumindest nicht mechanisch entfernt werden können, ohne das Produkt aufzuspalten. Wenn die Kern/Hülle-Teilchen auf die Oberfläche eines weitgehend fertig gestellten Wert- oder Sicherheitsproduktes aufgebracht werden, kann dieses anschließend mit einem Schutzlack überzogen werden, sodass die Teilchen gegen Fälschung oder Verfälschung geschützt sind.

Die Kern/Hülle-Teilchen können in einer zweidimensionalen Verteilung zwar vollflächig auf oder in dem Wert- oder Sicherheitsprodukt angeordnet sein. In einer bevorzugten Ausführungsvariante befinden sich die Kern/Hülle-Teilchen aber lediglich in einem räumlich begrenzten Bereich, beispielsweise in einem durch das Schaltkreiselement definierten Flächenbereich. Beispielsweise können sich die Teilchen in einer Schicht befinden, die unter dem Schaltkreiselement, im Falle eines Flip-Chip-Bauteils auf der Kontaktierungsseite des Bauteils, liegt.

In einer ersten Ausführungsform dieser Ausführungsvariante kann die die Kern/Hülle-Teilchen und gegebenenfalls die zweite chemische Substanz enthaltende Schicht vor dem Kontaktieren des Schaltkreiselements auf dessen Kontaktseite erzeugt werden. Das Schaltkreiselement wird dann zur Kontaktierung auf die Leiterbahn aufgesetzt / mit der Leiterbahn verbunden. In einer zweiten Ausführungsform kann die Schicht in dem Bereich auf die Leiterbahn aufgebracht werden, in dem das Schaltkreiselement montiert und kontaktiert wird. In einer dritten Ausführungsform kann die Schicht durch den Kleber gebildet werden, der sich zwischen dem Schaltkreiselement und der Leiterbahn befindet und mit dem das Schaltkreiselement auf der Leiterbahn montiert ist. Der Kleber enthält in diesem Falle die Kern/Hülle-Teilchen und gegebenenfalls die zweite chemische Substanz. In noch einer weiteren Ausführungsform der Erfindung werden zwei oder drei der vorstehend erläuterten Ausführungsformen miteinander kombiniert, sodass die Kern/Hülle-Teilchen und gegebenenfalls die zweite chemische Substanz in mehreren derartigen Schichten enthalten sind, d.h. in der auf der Kontaktseite des Schaltkreiselements und/oder im Montagebereich auf der Leiterbahn befindlichen Schicht und/oder im Kleber. In allen genannten Ausführungsformen befinden sich die Kern/Hülle-Teilchen und gegebenenfalls die zweite chemische Substanz vorzugsweise zwischen den Kontaktstellen des Schaltkreiselements bzw. zwischen den Anschlusskontakten der Leiterbahn.

Die Kern/Hülle-Teilchen können auch in die Produktlagen eingebracht werden, beispielsweise bereits bei der Herstellung der Produktlagen. Zur Einbettung der Kern/Hülle-Teilchen in das Produktmaterial kann dieses aus einem Vorprodukt zusammen mit den Kern/Hülle-Teilchen, die vorzugsweise in einem hierfür geeigneten Material dispergiert sind, extrudiert werden, sodass beispielsweise Folien, die die Teilchen enthalten, gebildet werden.

Die Kern/Hülle-Teilchen können beispielsweise vor dem Laminieren auf die Produktlagen auf- oder in diese eingebracht werden. Falls die Produktlagen aus PC oder PET bestehen oder mindestens eines dieser Polymere enthalten, kann eine Zubereitung für ein Druckmittel verwendet werden, das Kern/Hülle-Teilchen enthält und das auf der Basis eines PC-Derivats hergestellt ist, wobei ganz besonders bevorzugt das in DE 10 2007 052 947 A1 angegebene PC-Derivat verwendbar ist (geminal disubstituiertes Dihydroxydiphenylcycloalkan).

Die Kern/Hülle-Teilchen werden mit einem bekannten Verfahren hergestellt. Zur Herstellung derartiger Teilchen wird das den Kern bildende flüssige Material beispielsweise in einer Flüssigkeit, in der sie unlöslich ist, dispergiert, sodass sich kleinste Tröpfchen bilden, oder es werden feste Partikel in einer Flüssigkeit dispergiert, sodass sich eine Suspension bildet. Diese Tröpfchen bzw. Feststoff-Partikel können beispielsweise mittels geeigneter Netzmittel oder Emulgatoren stabilisiert werden. Ein Verfahren zur Herstellung von mit einer Hülle überzogenen Partikeln zur Bildung von Kern/Hülle-Teilchen beispielsweise mit Farbmitteln ist in EP 0 505 648 A1 angegeben. Danach wird ein hydrophobes Material mit einem Harz ummantelt, indem zunächst eine organische Phase, die durch eine Mischung eines oder mehrerer hydrophober Flüssigkeiten und/oder von hydrophoben Feststoffen mit einem sich selbst dispergierenden Harz gebildet ist, bereitgestellt wird und indem dieser Mischung dann eine wässrige Phase zugegeben wird, sodass das Harz darin eine Dispersion mit Teilchengrößen von bis zu 0,1 µm bildet und die hydrophobe Flüssigkeit und/oder den hydrophoben Feststoff ummantelt. Falls ein Feststoff ummantelt werden soll, wird dieser zunächst in die gewünschte Teilchengröße überführt, beispielsweise durch Vermahlen. In einem Beispiel wird ein fester Farbstoff (Cyaninblau) mit einem Harz (Polyurethanharz mit terminalen Isocyanatgruppen) in einer hydrophoben Flüssigkeit (Methylethylketon) dispergiert. Eine wässrige Lösung eines Amins wird dann mit dieser Dispersion vermischt und erhitzt. Durch Entfernen der hydrophoben Flüssigkeit entsteht eine wässrige Dispersion von ummantelten Farbpartikeln. Ein Verfahren zur Verkapselung mit TiO₂ ist in der Dissertation von Holger Strohm aus Würzburg, "Flüssigphasenabscheidung von Titandioxid auf Polymerlatex-Templaten", Bayerische Julius-Maximilians-Universität Würzburg, 2005 beschrieben. Nach dieser Druckschrift werden Latexpartikel zunächst mit Polyelektrolyten funktionalisiert. Anschließend werden darauf TiO₂-Partikel abgeschieden, indem die Latexpartikel mit einer Lösung von (NH₄)₂[TiF₆] und H₃BO₃/HCl in Kontakt gebracht werden. Zur Erzeugung von rein anorganischen Hohlkugeln werden die Latexpartikel anschließend entfernt, entweder durch Kalzinierung der TiO₂-Schichten an Luftatmosphäre oder auf

chemischem Wege durch Auflösen des Templatkerns mit Toluol. Auf diese Weise werden sogenannte Nano-Container erzeugt, die für etliche Anwendungen bereits beschrieben sind, beispielsweise für Transporter medizinischer Wirkstoffe, für Selbstheilungsprozesse von Werkstoffen und dergleichen. Weitere Verfahren zur Herstellung von Kern/Hülle-Teilchen werden auch von Skirtach et al., "Laser-Induced Release of Encapsulated Materials Inside Living Cells", Angew. Chem. Int. Ed., 2006, 45, 4612-4617 und Angelatos et al., "Light-Responsive Polyelectrolyte/Gold Nanoparticle Microcapsules", J. Phys. Chem. B, 2005, 109, 3071-3076 angegeben.

Demnach werden die Kern/Hülle-Teilchen des Wert- oder Sicherheitsproduktes zu deren Herstellung beispielsweise durch eine in den Kern aufzunehmende Flüssigkeit tröpfchenförmig vorgelegt und mit einem Hüllmaterial umhüllt, beispielsweise mit TiO₂ oder mit Metall, beispielsweise AI, oder mit einem Polymer, beispielsweise mit einem Acrylat.

Alternativ können auch poröse Partikel mit einer Flüssigkeit beladen (getränkt) werden, indem die Flüssigkeit in die Poren dieser Partikel aufgenommen wird, und die porösen Partikel werden anschließend mit dem Hüllmaterial umhüllt. Oder poröse oder nicht poröse Partikel können mit der Flüssigkeit beschichtet und mit dem Hüllmaterial umhüllt werden. Die Partikel bilden die Kern/Hülle-Teilchen. Als pörose Partikel kommen anorganische Materialien wie beispielsweise Zeolithe oder organische Materialien, wie beispielsweise Mikroschäume auf Polyurethanbasis, oder poröse Nanopartikel oder anorganische Mikro-Container in Frage. Ferner sind auch poröse Materialien durch Spray-Pyrolyse herstellbar. Hierzu wird auf M. Hampden-Smith, T. Kodas, S. Haubrich, M. Oljaca, R. Einhorn, D. Williams, "Novel Particulate Production Processes to Create Unique Security Materials", in: Proc. SPIE 6075, Optical Security and Counterfeit Deterrence Techniques VI, 60750K (February 09, 2006); doi:10.1117/12.641883 verwiesen.

Weitere Herstellverfahren für Kern/Hülle-Teilchen (u.a. Hohlglas-Partikel) sind in D.G. Shchukin, H. Möhwald, "Self-Repairing Coatings Containing Active Nanoreservoirs", in: www.small-journal.com (small), 2007, 3, Nr. 6, 926-943, Wiley-VCH Verlag, Weinheim angegeben.

Die Kern/Hülle-Teilchen haben vorzugsweise eine Größe im Nanometer- oder Mikrometerbereich oder Sub-Mikrometerbereich, d.h. im Falle eines im Wesentlichen kugel- oder kubus- oder quaderförmigen Teilchens liegt dessen Durchmesser bzw. Hauptdiagonale im Mikrometerbereich oder darunter, vorzugsweise im Bereich von 0,005 bis 500 µm, weiter bevorzugt von 0,1 bis 100 µm und am meisten bevorzugt von 0,5 bis 50 µm. Die Kern/Hülle-Teilchen können allerdings auch Plättchen- oder Nadelform haben. Auch in diesem Falle liegt deren Dicke bzw. Nadeldurchmesser im Mikrometerbereich oder darunter, vorzugsweise im Bereich von 0,005 bis 500 µm, weiter bevorzugt von 0,1 bis 100 µm und am meisten bevorzugt von 0,5 bis 50 µm. Die Größendimension in Längserstreckung, d.h. parallel zur Plättchenebene oder Nadellänge, beträgt vorzugsweise von 0,5 bis 500 µm, vorzugsweise von 1 bis 100 µm und ganz besonders bevorzugt von 5 bis 50 µm.

Die Kern/Hülle-Teilchen können zur Applikation auf und/oder in das Wert- oder Sicherheitsprodukt in noch einer weiteren bevorzugten Weiterbildung der vorliegenden Erfindung als disperse Phase in einem Dispergiermittel enthalten sein, sodass das Dispergiermittel und die Kern/Hülle-Teilchen zusammen eine Dispersion bilden, die ein Dotiermittel bildet. Beispielsweise kann der zur Montage und Kontaktierung des Schaltkreiselements auf der Leiterbahn verwendete Leitkleber als Dispergiermittel eingesetzt werden. Das Dispergiermittel kann beispielsweise durch ein Bindemittel gebildet sein. Das Dotiermittel kann dann beispielsweise auf das Wert- oder Sicherheitsprodukt oder eine Produktlage, die zur Lamination zur Bildung des Wert- oder Sicherheitsproduktes vorgesehen ist, aufgebracht bzw. in das Wert- oder Sicherheitsprodukt eingebracht werden. Zur Aufbringung auf das Wert- oder Sicherheitsprodukt oder die Produktlage ist das Dotiermittel flüssig oder pastös. Vorzugsweise sind die Materialien des Dispergiermittels für die Kern/Hülle-Teilchen und des Wert- oder Sicherheitsproduktes oder der Produktlage chemisch miteinander kompatibel. Das bedeutet, dass sie chemisch ähnlich oder identisch sind. Dadurch wird eine Delamination des Wert- oder Sicherheitsproduktes auch im Bereich der Kern/Hülle-Teilchen verhindert oder zumindest wesentlich erschwert. Vorzugsweise sind die Bindemittel einer Dispersion, die die Kern/Hülle-Teilchen enthält, und das Produktmaterial der Produktlage, auf oder in die die Teilchen auf- bzw. eingebracht sind, sowie vorzugsweise auch das Produktmaterial von an dieser Produktlage anliegenden weiteren Produktlagen chemisch/stofflich miteinander identisch oder zueinander ähnlich. Besonders bevorzugt ist das Wert- oder Sicherheitsprodukt oder zumindest sind die vorgenannten Produktlagen aus einem Produktmaterial gebildet, das mindestens teilweise aus PC besteht oder dieses enthält, und die Dispersion enthält vorzugsweise ein PC-Bindemittel. Weiter bevorzugt ist das Wert- oder Sicherheitsprodukt aus mindestens zwei Produktlagen gebildet, von denen mindestens eine aus PC besteht oder PC enthält, und die Kern/Hülle-Teilchen sind aus einer PC als Bindemittel enthaltenden Dispersion auf oder in diese mindestens eine PC-Produktlage auf- oder eingebracht.

Beispielsweise können die Kern/Hülle-Teilchen in noch einer weiteren bevorzugten Weiterbildung der vorliegenden Erfindung als disperse Phase in einem Dispergiermittel für ein Druckmittel enthalten sein, sodass ein Druckmittel, das die Kern/Hülle-Teilchen enthält, gebildet wird. Das Dispergiermittel kann beispielsweise durch ein Bindemittel gebildet sein. Das Druckmittel kann die für dessen Anwendung erforderlichen rheologischen Eigenschaften aufweisen. Das Druckmittel kann dann auf das Wert- oder Sicherheitsprodukt und/oder auf mindestens eine Produktlage gedruckt werden. Das Dispergiermittel kann jedes beliebige Bindemittel sein, das die Kern/Hülle-Teilchen ohne Veränderung aufnimmt und in dem die Teilchen dispergierbar und stabil sind. Als Dispergiermittel kann jedes Bindemittel verwendet werden, das für einen drucktechnischen Prozess geeignet ist, insbesondere für ein Flachdruckverfahren, ganz besonders für ein Offsetdruckverfahren, oder für ein Tiefdruck- oder Non-Impact-Druckverfahren, wie zum Beispiel ein Tintenstrahldruckverfahren (InkJet), oder ein Durchdruckverfahren, ganz besonders ein Siebdruckverfahren. Für ein Tintenstrahldruckverfahren sind entsprechende Zusammensetzungen für Druckmittel in DE 10 2007 052 947 A1 angegeben. Geeignete Bindemittel für andere Druckverfahren sind ebenfalls allgemein bekannt. Das Dotiermittel, vorzugsweise Druckmittel, wird besonders bevorzugt in einer zweidimensionalen Verteilung auf eine Produktlage oder das Produkt aufgebracht. Anstelle eines Druckverfahrens kommen als Beschichtungsverfahren auch andere Verfahren in Betracht, beispielsweise Aufrakeln, Vorhanggießen, Roller-Coaten, Spray-Coating, Dispensen, Spritzen und Imprägnieren.

In noch einer weiteren Weiterbildung der vorliegenden Erfindung werden mindestens zwei Produktlagen bereitgestellt. Diese werden dann in einem weiteren Verfahrensschritt nach dem Aufbringen der Kern/Hülle-Teilchen auf und/oder nach dem Einbringen in mindestens eine der Produktlagen aufeinandergestapelt und durch Laminieren miteinander verbunden.

Das Produktmaterial ist vorzugsweise aus einem Polymer gebildet. Besonders bevorzugt ist das Produktmaterial durch PC, insbesondere auf Bisphenol A-Basis oder auf Basis eines geminal disubstituierten Dihydroxydiphenylcycloalkans gebildet. Alternativ kann das Produktmaterial auch durch PET oder ein anderes Produktmaterial gebildet sein.

Das Wert- oder Sicherheitsprodukt wird vorzugsweise aus einer mit den Kern/Hülle-Teilchen versehenen Polymerlage, ferner weiteren Polymerlagen, auf denen sich keine Teilchen befinden und gegebenenfalls außenseitigen Schutzlackierungen oder Schutzfolien hergestellt. Die elektrische Schaltung kann auf einer der Polymerlagen gebildet sein und ein Inlay bilden. Die Schutzlackierungen oder Schutzfolien dienen zum außenseitigen Schutz gegen Beschädigungen (Verkratzungen) und zum Einschließen von ansonsten außenseitig angebrachten Sicherheitsmerkmalen in das Innere des Produkts, um vor Manipulationen zu schützen. Ferner kann außenseitig auch eine diffraktive Folie angebracht werden. Unmittelbar unterhalb der Schutzlackierungen oder Schutzfolien können weitere Kern/Hülle-Teilchen angeordnet sein. Typischerweise wird die Lamination von PC in einer Heiß/Kalt-Laminierpresse in einem ersten Schritt bei 170 bis 200°C und einem Druck von 50 bis 600 N/cm² und in einem zweiten Schritt bei Kühlung etwa auf Raumtemperatur und unter demselben Druck hergestellt. Die Lamination von PET findet bei einer höheren Temperatur statt, beispielsweise bei 220°C. Die Polymerfolien haben typischerweise eine Dicke von 25 bis 150 µm, vorzugsweise von 50 bis 100 µm.

Das Wert- oder Sicherheitsprodukt weist mindestens ein Sicherheitsmerkmal auf, das entweder individualisierend oder nicht individualisierend ist. Als Sicherheitsmerkmale kommen Melierfasern, Guillochen, Wasserzeichen, Prägedrucke, Sicherheitsfäden, Mikroschrift, Kippbilder, Hologramme, optisch variable Pigmente, lumineszierende Farben, Durchlichtpasser und dergleichen in Betracht. Als Schaltkreiselement kann das Dokument alternativ oder zusätzlich zu dem Halbleiterchip andere elektronische Komponenten aufweisen, beispielsweise elektronische Anzeigeelemente, LEDs, berührungsempfindliche Sensoren und dergleichen. Die elektrische Schaltung kann beispielsweise zwischen zwei opaken Lagen des Dokuments versteckt angeordnet sein. Die Kern/Hülle-Teilchen können in unmittelbarer Nähe zu einem oder mehreren der Sicherheitsmerkmale angeordnet werden, sodass eine Manipulation eines Sicherheitsmerkmals zwangsläufig zu einer Freisetzung der ersten chemischen Substanz aus den Kern/Hülle-Teilchen führt.

Die vorliegende Erfindung wird nachfolgend anhand von Figuren näher erläutert, wobei die dargestellten Beispiele lediglich exemplarischen Charakter haben und keine Einschränkung hinsichtlich der Tragweite der beschriebenen Erfindung haben. Es zeigen im Einzelnen:
- Fig. 1: eine schematische isometrische Darstellung eines Wert- oder Sicherheitsdokuments in Form einer Identitätskarte;
- Fig. 2: eine schematische Schnittansicht der Identitätskarte von Fig. 1 entlang der Linie I-I;
- Fig. 3: eine Innenlage (Inlay) mit einer RFID-Schaltung in einer schematischen Draufsicht;
- Fig. 4: eine schematische Schnittansicht der RFID-Schaltung von Fig. 3 entlang der Linie II-II;
- Fig. 5: einen Ausschnitt Z₁ der RFID-Schaltung von Fig. 4 in einer ersten Ausführungsvariante;
- Fig. 6: einen Ausschnitt Z₁ der RFID-Schaltung von Fig. 4 in einer zweiten Ausführungsvariante;
- Fig. 7: einen Ausschnitt Z₁ der RFID-Schaltung von Fig. 4 in einer dritten Ausführungsvariante;
- Fig. 8: einen Ausschnitt Z₂ der RFID-Schaltung von Fig. 4;
- Fig. 9: eine schematische Darstellung eines unbeschädigten und eines durch eine beispielsweise mechanische Einwirkung beschädigten Kern/Hülle-Teilchens in einer Schnittansicht;
- Fig. 10: eine schematische Darstellung der Bildung einer Kurzschlussbrücke zwischen zwei Leiterbahnen in einer ersten Ausführungsvariante;
- Fig. 11: eine schematische Darstellung der Bildung einer Kurzschlussbrücke zwischen zwei Leiterbahnen in einer zweiten Ausführungsvariante.

In den Figuren bezeichnen gleiche Bezugszeichen Elemente mit derselben Funktion oder gleiche Elemente.

Das erfindungsgemäße manipulationsabgesicherte Wert- oder Sicherheitsprodukt 100 kann ein Wert- oder Sicherheitsdokument oder ein Sicherheitselement sein, das beispielsweise als Aufkleber auf einen zu sichernden Artikel, beispielsweise ein Wert- oder Sicherheitsdokument, aufgebracht und mit diesem fest verbunden werden kann. Das Wert- oder Sicherheitsdokument kann ein Personaldokument, wie ein Reisepass, ein Personalausweis, ein Zugangsausweis oder dergleichen, eine Scheckkarte oder eine Banknote oder noch ein anderes Dokument, sein. Alle nachfolgenden Beispiele werden stellvertretend für andere Dokumententypen anhand einer derartigen Karte beschrieben.

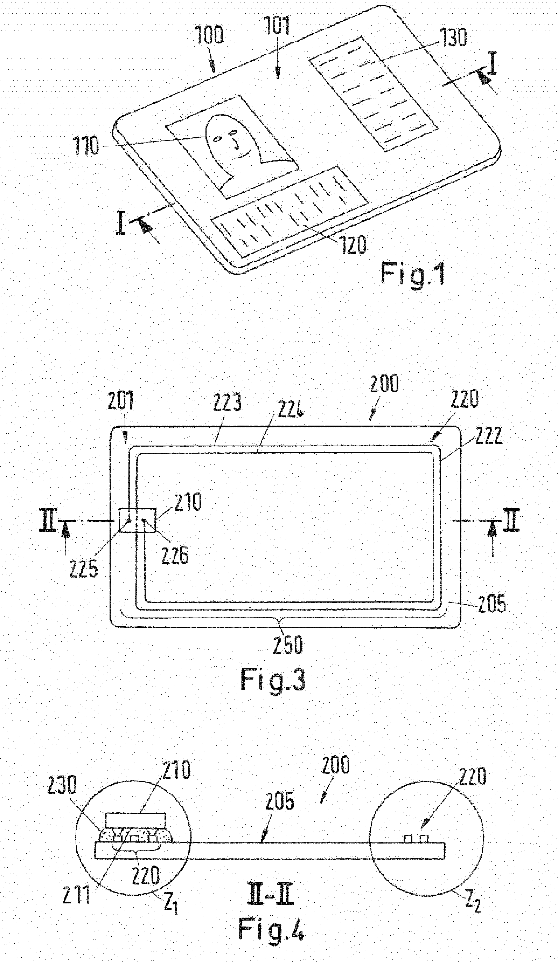

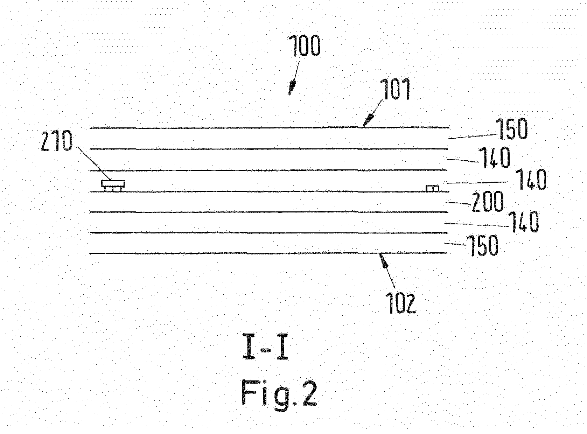

In Fig. 1, 2 ist stellvertretend für andere derartige Produkte eine Identitätskarte 100 dargestellt, die beispielsweise als Laminat aus mehreren innenliegenden Polymerlagen 140 sowie einer Schaltungsinnenlage 200 (Inlay), die ebenfalls aus Polymer gebildet ist und die eine darauf befindliche elektrischen Schaltung 250 aufweist (Fig. 3), zusammengefügt worden ist. Beispielsweise können die Polymerlagen aus PC und/oder PET bestehen. Die einzelnen Lagen können ungefüllt oder mit Füllstoffen gefüllt sein. In letzterem Falle sind sie opak, ansonsten transparent/transluzent. Die Lagen können vorzugsweise derart miteinander verbunden sein, dass sie einen monolithischen Block bilden, der nur schwierig gespalten werden kann. In Fig. 2 sind zur Veranschaulichung die vor dem Laminieren noch vereinzelten Lagen sichtbar dargestellt. Die äußeren Schichten 150 der Karte können aus einem Schutzlack bestehen, der nach dem Laminieren auf die Karte aufgetragen worden ist. Der Schutzlack ist transparent, sodass darunter liegende Informationen von außen sichtbar sind. Die in der Karte innenliegend angeordnete Schaltungslage ist eine RFID-Innenlage, die einen RFID-Schaltkreis 250 mit einer in Form einer Antenne 220 gebildeten Leiterbahn sowie mit einem mit der Antenne elektrisch verbundenen Schaltkreiselement (Halbleiterchip, RFID-Chip) 210 aufweist (Fig. 3). Der Schaltkreis ist wegen weiter außen liegender opaker Polymerlagen nicht sichtbar.

Die Karte 100 weist eine Oberseite 101 und eine Unterseite 102 auf. Auf der Oberseite befinden sich ein Gesichtsbild 110 des Inhabers der Karte sowie zwei Datenfelder, nämlich ein erstes Datenfeld 120 und ein zweites Datenfeld 130, mit Karten- und Inhaberdaten in Klarschrift und/oder in verschlüsselter Form. Diese sind durch entsprechende Druckschichten hergestellt, die auf einer der äußeren Lagen des Dokuments oder aber auch unmittelbar unter der außenliegenden Schutzlackschicht, liegen. Alternativ können diese Daten auch durch Laser-Engraving nachträglich im Inneren der Karte erzeugt worden sein.

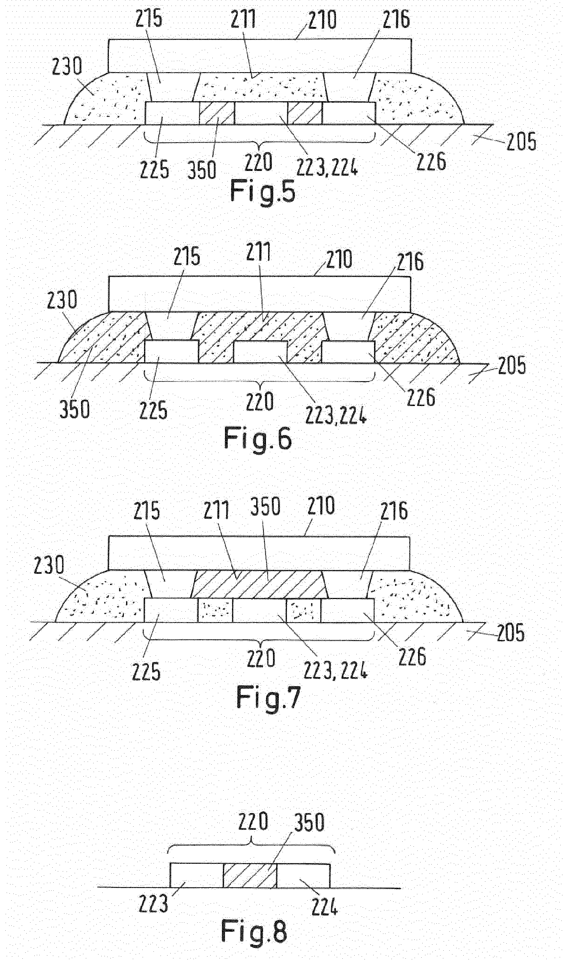

Auf der RFID-Innenlage 200 ist die elektrische Schaltung 250 auf der Oberseite 201 einer Polymerlage 205 hergestellt (Fig. 3, 4). Die elektrische Schaltung dient dem Datenaustausch mit einem externen Transponder (nicht dargestellt). Hierzu ist eine Antenne 220 Bestandteil der elektrischen Schaltung. Diese Antenne ist durch eine durchgehende Leiterbahn 222 gebildet, die mehrere spiralförmig angeordnete Windungen 223, 224 beschreibt, die parallel zueinander verlaufen. Diese Leiterbahn weist an ihren Enden jeweils einen Anschlusskontakt 225, 226 auf. Über diese Anschlusskontakte ist die Antenne mit dem RFID-Chip 210 elektrisch verbunden. Der RFID-Chip 210 ist als Flip-Chip ausgeführt. D.h es handelt sich um einen ungehäusten, gegebenenfalls gedünnten Chip (Dicke beispielsweise 80 µm), der an einer Funktionsseite 211 Kontaktstellen in Form von Kontakthöckern (Bumps) 215, 216 aufweist (Fig. 5, 6, 7). Der Chip wird zur Kontaktierung und Montage auf der RFID-Innenlage kopfüber, d.h. mit seinen Kontakthöckern nach unten auf die Antenne 220 aufgesetzt, sodass der Chip die parallel laufenden Windungen 223, 224 wie eine Brücke überspannt. Die Kontakthöcker werden passgenau auf die Anschlusskontakte 225, 226 der Antenne aufgesetzt. Damit der Chip auf der Innenlage fest montiert bleibt und damit insbesondere eine gute elektrische Verbindung jedes Kontakthöckers zu einem entsprechenden Anschlusskontakt der Antenne hergestellt wird, wird zwischen der Kontaktseite des Chips und der Antenne zusätzlich ein anisotrop leitfähiger Kleber 230 appliziert, der die mechanische Festigkeit und die erforderliche elektrische Leitfähigkeit liefert.

Zur Herstellung eines erfindungsgemäßen Wert- oder Sicherheitsproduktes, insbesondere der Identitätskarte 100, werden die Polymerlagen 140 und die RFID-Innenlage 200 nach deren Herstellung mit der elektrischen Schaltung 250 zusammengeführt und gestapelt und dann miteinander laminiert. Die oberhalb der RFID-Innenlage liegende Polymerlage kann eine Ausgleichslage sein, die an der Stelle, an der sich der RFID-Chip 210 befindet, einen Ausschnitt aufweist, sodass der Chip nach dem Stapeln in diesen Ausschnitt hineinragt (nicht dargestellt; in Fig. 2 in der den RFID-Chip 210 einschließenden Lage 140 enthalten). Für das Laminieren können die hierfür geeigneten Laminierparameter in herkömmlicher Art und Weise eingestellt werden (Druck, Temperatur). Durch Verbindung der Lagen entsteht ein monolithischer Block. Die elektrische Schaltung, insbesondere der RFID-Chip, wird von dem beim Laminiervorgang fließenden Polymermaterial umflossen und damit vollständig eingeschlossen.

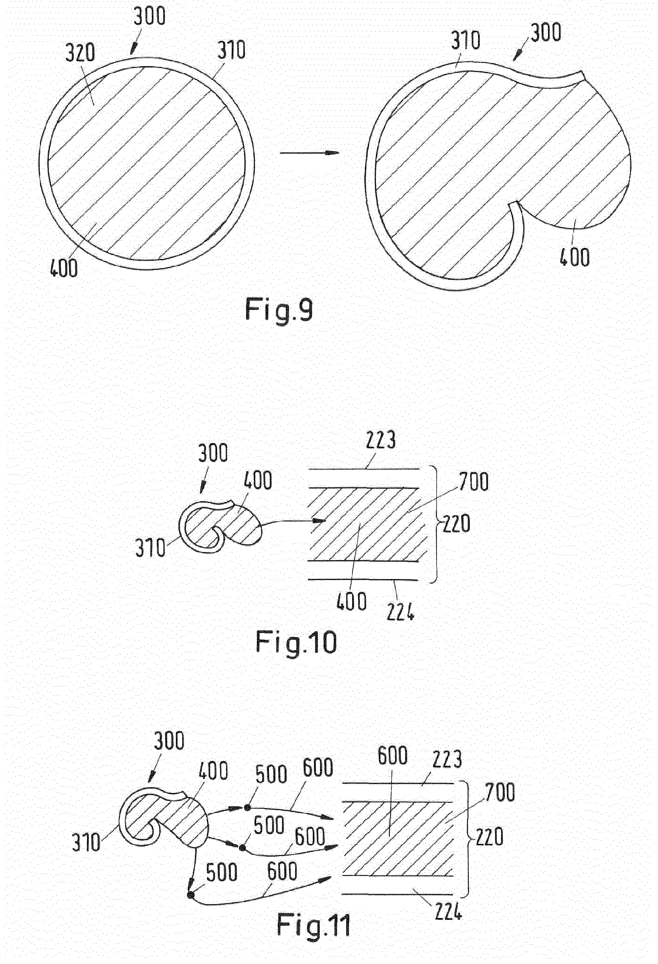

Zur erfindungsgemäßen Sicherung des Wert- oder Sicherheitsproduktes 100 sind in diesem Kern/Hülle-Teilchen 300 eingelagert. Ein derartiges Teilchen ist in Fig. 9 gezeigt. Die Darstellung in dieser Figur zeigt das Kern/Hülle-Teilchen vor und nach einer beispielsweise mechanischen Einwirkung auf das Wert- oder Sicherheitsdokument 100. Das Kern/Hülle-Teilchen ist beispielsweise sphärisch und weist beispielsweise einen Durchmesser von wenigen µm, beispielsweise 5 µm, auf. Das Teilchen ist aus einer Hülle 310 und einem von der Hülle allseitig und dicht umgebenen Kern 320 umgeben, der ein Kernvolumen aufweist. In dem Kernvolumen befindet sich die erste chemische Substanz 400, beispielsweise eine Leitfarbe, etwa Silber-Flakes in einer Alkohol/Wasser-Mischung, oder eine ionische Flüssigkeit, beispielsweise 1-Ethyl-3-methyl-imidazolium tetrafluoroborat oder N-Butyl-N-trimethylammonium bis(trifluoromethylsulfonyl)imid. Die Hülle kann beispielsweise aus einem Polymer, beispielsweise einem Polyacrylat, oder aus einer anorganischen Verbindung, beispielsweise Ti0₂, bestehen. Alternativ kann der Kern auch durch ein poröses Teilchen gebildet sein, das die Leitfarbe oder ionische Flüssigkeit in den Poren enthält.

Durch mechanische Einwirkung, beispielsweise Erzeugung eines lokalen Druckes oder durch Aussetzen des Teilchens 300 einem Scherfeld, wird die Hülle 310 beschädigt oder vollständig zerstört. Dadurch wird die in dem Kernvolumen enthaltene erste chemische Substanz 400 freigesetzt, die daraufhin austritt. Falls die erste chemische Substanz eine elektrisch leitfähige Substanz ist, wie die oben genannte Leitfarbe oder ionische Flüssigkeit, gelangt diese zu der elektrischen Schaltung 250 und erzeugt eine Kurzschlussbrücke zwischen zwei bis dahin voneinander isolierten elektrischen Leitern der Schaltung.

Ein Beispiel für einen derartigen Ablauf ist in Fig. 10 wiedergegeben:
Fig. 10 zeigt rechts in der Darstellung einen Ausschnitt aus der Antenne 220 der RFID-Schaltung 250 mit einer ersten Windung 223 und einer parallel dazu angeordneten zweiten Windung 224. Die Kern/Hülle-Teilchen 300 werden hier durch ein einziges Teilchen symbolisch wiedergegeben. Derartige Kern/Hülle-Teilchen können sich anfangs beispielsweise in einem Bindemittel dispergiert schichtförmig zwischen den Windungen 223, 224 auf der RFID-Innenlage 200 befinden. Aus den durch mechanische Einwirkung zerstörten Teilchen tritt die erste chemische Substanz 400, die elektrisch leitfähig ist, aus. Diese Substanz befindet sich dann zwischen den beiden Windungen der Antenne und erzeugt eine elektrische Verbindung (Kurzschlussbrücke) 700 zwischen den beiden Windungen. Da die Resonanzfrequenz der RFID-Schaltung maßgeblich von der Impedanz der Antenne abhängt, wird durch die elektrische Verbindung der benachbarten Windungen mittels der ersten chemischen Substanz die Resonanzfrequenz der Schaltung erheblich verändert. Da zusätzlich der RFID-Chip 210 an die ursprüngliche Impedanz der Antenne angepasst ist, nicht aber an die geänderte Impedanz, wird die gesamte Schaltung mit dem Transponder keine Daten mehr austauschen.

Ein weiteres Beispiel für die Erzeugung einer Kurzschlussbrücke 700 zwischen zwei voneinander isolierten elektrischen Leitern der Schaltung 250 ist in Fig. 11 gezeigt:
Fig. 11 zeigt rechts in der Darstellung wiederum einen Ausschnitt aus der Antenne 220 der RFID-Schaltung 250 mit einer ersten Windung 223 und einer parallel dazu angeordneten zweiten Windung 224. Die Kern/Hülle-Teilchen 300 werden auch hier durch ein einziges Teilchen symbolisch wiedergegeben. Aus dem durch mechanische Einwirkung zerstörten Teilchen tritt die erste chemische Substanz 400, die elektrisch allerdings nicht leitfähig ist, aus. Diese Substanz wird mit einer zweiten chemischen Substanz 500 zu einer dritten chemischen Substanz 600 chemisch umgesetzt. Beispielsweise kann die erste chemische Substanz eine Silbernitratlösung sein. Die zweite chemische Substanz kann in diesem Falle ein Oligosaccharid, beispielsweise Saccharose sein. Die zweite chemische Substanz kann sich anfangs beispielsweise zusammen mit den Kern/Hülle-Teilchen in Form einer Schicht zwischen den Antennenwindungen 223, 224 auf der RFID-Innenlage 200 befinden (nicht dargestellt). Durch die mechanische Einwirkung auf die Identitätskarte 100 werden die Kern/Hülle-Teilchen zerstört, sodass die Silbernitratlösung austritt. Beim Austritt trifft diese auf die Saccharose und reagiert mit dieser unter Bildung von metallischem Silber, das eine sehr gute elektrische Leitfähigkeit aufweist. Das Silber bildet eine dritte chemische Substanz 600, die zwischen den beiden Leiterbahnen 223, 224 die Kurzschlussbrücke 700 bildet. Auch in diesem Falle wird die Resonanzfrequenz der RFID-Schaltung erheblich verändert, sodass die RFID-Schaltung mit dem Transponder keine Daten mehr austauschen kann.

Erfindungsgemäße Ausführungsformen für den Manipulationsschutz des Schaltkreiselements 210, beispielsweise des RFID-Chips, sind in den Fig. 5, 6, 7 wiedergegeben. Diese Darstellungen geben die Ausschnitte Z₁ der elektrischen Schaltung aus Fig. 4 wieder. Der RFID-Chip 210 ist als Flip-Chip ausgebildet und weist einseitig zwei Kontakthöcker (Bumps) 215, 216 auf, die die Kontaktstellen des Chips bilden. Der Chip ist kopfüber montiert, sodass die Kontakthöcker nach unten weisen. Die Kontakthöcker sind passgenau auf entsprechende Anschlusskontakte 225, 226 der Antenne 220 aufgesetzt. Lediglich eine Windung 223, 224 (Übergang der ersten Windung 223 zur zweiten Windung 224) läuft unter dem Chip hindurch. Für die Montage des Chips dient ein anisotrop leitfähiger Kleber 230, der den Raum zwischen dem Chip und der Polymerlage 205 der RFID-Innenlage (bis auf die in den verschiedenen Ausführungsformen gemäß Fig. 5, 6, 7 vorgesehenen Schichten 350 der Kern/Hülle-Teilchen 300) ausfüllt. Der anisotrop leitfähige Kleber verbindet den Chip und die Antenne miteinander, sodass der Chip mechanisch verankert ist, und schafft auch die elektrische Leitfähigkeit zwischen den Kontakthöckern des Chips und den Anschlusskontakten der Antenne.

In einer ersten Ausführungsform (Fig. 5) ist eine Schicht 350 der Kern/Hülle-Teilchen zwischen den Antennen-Windungen 223, 224 bzw. deren Anschlusskontakten 225, 226 auf die Oberseite 201 der Schaltungsinnenlage aufgebracht. Falls diese Schicht Kern/Hülle-Teilchen enthält, die eine elektrisch leitfähige erste chemische Substanz 400 enthalten, braucht keine zweite chemische Substanz 500 vorgesehen zu werden. Falls aber die erste chemische Substanz nicht elektrisch leitfähig ist, beispielsweise eine saure Lösung einer heterocyclischen aromatischen Verbindung ist, wie ein Pyrrol- oder Thiophen-Derivat, ist eine zweite chemische Substanz vorzusehen, in diesem Falle ein Oxidationsmittel, beispielsweise Braunstein, mit dem die erste chemische Substanz nach dem Austritt aus den zerstörten Kern/Hülle-Teilchen reagieren kann, wobei eine dritte chemische Substanz, in diesem Falle ein elektrisch leitfähiges Polypyrrol- oder Polythiophen-Derivat, entsteht. Diese zweite chemische Substanz kann vorzugsweise in der Schicht, die auch die Kern/Hülle-Teilchen enthält, zusätzlich enthalten sein, sodass die freigesetzte erste chemische Substanz mit der zweiten chemischen Substanz unmittelbar in Kontakt kommt. Durch die Bildung einer elektrischen Leitfähigkeit zwischen den Anschlusskontakten der Antenne 220 wird diese kurzgeschlossen, sodass die aufgenommene elektrische Energie, die vom Transponder geliefert wird, nicht mehr an den RFID-Chip weitergeleitet werden kann. Daher ist ein Datenaustausch zwischen dem Transponder und der Karte unterbunden.

In einer zweiten Ausführungsform (Fig. 6) ist die Schicht 350 mit den Kern/Hülle-Teilchen durch den anisotrop leitfähigen Kleber 230 gebildet. Die Kern/Hülle-Teilchen 300 sind in diesem Falle in den Kleber eingebracht (dispergiert). Auch in dieser Ausführungsform braucht keine zweite chemische Substanz 500 vorgesehen zu werden, falls der Kleber Kern/Hülle-Teilchen enthält, die eine elektrisch leitfähige erste chemische Substanz 400 enthalten. Falls aber die erste chemische Substanz nicht ausreichend elektrisch leitfähig ist, beispielsweise eine hoch alkalische Lösung von komplexierten Kupferionen, ist eine zweite chemische Substanz vorzusehen, in diesem Falle ein Reduktionsmittel, vorzugsweise Paraformaldehyd, mit dem die erste chemische Substanz nach dem Austritt aus den zerstörten Kern/Hülle-Teilchen reagieren kann, wobei eine dritte chemische Substanz 600, in diesem Falle metallisches Kupfer, entsteht. Die zweite chemische Substanz kann vorzugsweise in der Kleberschicht zusätzlich enthalten sein, sodass die freigesetzte erste chemische Substanz mit der zweiten chemischen Substanz unmittelbar in Kontakt kommt. Durch die Bildung einer elektrisch leitenden Verbindung zwischen den Anschlusskontakten der Antenne 220 und den Kontakthöckern 215, 216 des Chips 210 werden diese kurzgeschlossen, sodass ein Datenaustausch zwischen dem Transponder und der Karte unterbunden wird.

In einer dritten Ausführungsform (Fig. 7) ist die Schicht 350 mit den Kern/Hülle-Teilchen zwischen den Kontakthöckern 215, 216 des RFID-Chips 210 gebildet. Diese Schicht kann vor dem Montieren des Chips auf der Antenne 220 auf dem Chip gebildet werden. Auch in dieser Ausführungsform braucht keine zweite chemische Substanz 500 vorgesehen zu werden, falls der Kleber Kern/Hülle-Teilchen enthält, die eine elektrisch leitfähige erste chemische Substanz 400 enthalten. Falls aber die erste chemische Substanz nicht elektrisch leitfähig ist, ist eine zweite chemische Substanz vorzusehen, mit dem die erste chemische Substanz nach dem Austritt aus den zerstörten Kern/Hülle-Teilchen reagieren kann, wobei eine dritte chemische Substanz 600 entsteht. Die zweite chemische Substanz kann vorzugsweise in der die Kern/Hülle-Teilchen enthaltenden Schicht zusätzlich enthalten sein, sodass die freigesetzte erste chemische Substanz mit der zweiten chemischen Substanz unmittelbar in Kontakt kommt. Durch die Bildung einer elektrisch leitenden Verbindung zwischen den Kontakthöckern 215, 216 des Chips 210 werden diese kurzgeschlossen, sodass ein Datenaustausch zwischen dem Transponder und der Karte unterbunden wird.

In noch einer weiteren Ausführungsform können die Kern/Hülle-Teilchen 300 auch zwischen zwei Abschnitten der Windungen 223, 224 der Antenne 220 eine Kurzschlussbrücke 700 bilden. Die die Kern/Hülle-Teilchen enthaltende Schicht 350 in dieser Ausführungsform ist in Fig. 8 dargestellt. Diese Darstellung gibt den Ausschnitt Z₂ der elektrischen Schaltung aus Fig. 4 vor der Bildung der Kurzschlussbrücke in dem dem RFID-Chip gegenüberliegenden Zweig der Antenne 220 wieder.

Alternativ können die Kern/Hülle-Teilchen auch in oder auf die Ausgleichslage ein- bzw. aufgebracht sein (in Fig. 2 ist die Ausgleichslage Teil der den Chip 210 einschließenden Lage 140 oberhalb der RFID-Innenlage 200). Wenn die Kern/Hülle-Teilchen auf die Ausgleichslage aufgebracht sind, befinden sie sich auf der der RFID-Innenlage 200 zugewandten Seite.

### Bezugszeichen:

- 100: Wert- oder Sicherheitsprodukt, -dokument, Identitätskarte
- 101: (Karten)Oberseite
- 102: (Karten)Unterseite
- 140: Polymerlage
- 150: Schutzlackschicht
- 200: Schaltungsinnenlage, RFID-Innenlage
- 201: Lagenoberseite
- 205: Polymerlage der Schaltungsinnenlage
- 210: Schaltkreiselement, Halbleiterchip, RFID-Chip
- 211: Funktionsseite, Kontaktseite
- 215: Kontakthöcker, Bump
- 216: Kontakthöcker, Bump
- 220: Antenne
- 222: Leiterbahn der Antenne
- 223: Antennenwindung
- 224: Antennenwindung
- 230: anisotrop leitfähiger Kleber
- 250: elektrische Schaltung, RFID-Schaltung
- 300: Kern/Hülle-Teilchen
- 310: Hülle des Kern/Hülle-Teilchens
- 320: Kern des Kern/Hülle-Teilchens
- 350: Schicht der Kern/Hülle-Teilchen
- 400: erste chemische Substanz
- 500: zweite chemische Substanz
- 600: dritte chemische Substanz
- 700: Kurzschlussbrücke

## Patentansprüche

1. Wert- oder Sicherheitsprodukt (100) mit mindestens einer innenliegenden elektrischen Schaltung (250), die durch mindestens einen Halbleiterchip (210) und mindestens eine mit dem mindestens einen Halbleiterchip (210) elektrisch verbundene spiralförmige Antennen-Leiterbahn (220) gebildet ist, wobei das Wert- oder Sicherheitsprodukt (100) ferner mindestens eine erste chemische Substanz (400) enthaltende Kern/Hülle-Teilchen (300) enthält, wobei die Kern/Hülle-Teilchen (300) durch eine Hülle (310) sowie durch einen von der Hülle (310) umgebenen Kern (320) gebildet sind, sodass die mindestens eine erste chemische Substanz (400) durch eine Einwirkung auf das Wert- oder Sicherheitsprodukt (100) freisetzbar ist, zu der mindestens einen elektrischen Schaltung (250) gelangen und dort allein oder nach Reaktion mit mindestens einer zweiten chemischen Substanz (500) die elektrische Funktionsfähigkeit der elektrischen Schaltung (250) zumindest beeinträchtigen kann, **dadurch gekennzeichnet, dass** der Halbleiterchip (210) brückenförmig über die spiralförmige Antennen-Leiterbahn aufgesetzt ist, sodass eine erste Kontaktstelle (215) des Halbleiterchips (210) mit einem ersten Anschlusskontakt (225) der Antennen-Leiterbahn (220) und eine zweite Kontaktstelle (216) des Halbleiterchips (210) mit einem zweiten Anschlusskontakt (226) der Antennenleiterbahn (220) verbunden sind und dass die Beeinträchtigung oder Aufhebung der elektrischen Funktionsfähigkeit der elektrischen Schaltung (250) aufgrund der Freisetzung der mindestens einen ersten chemischen Substanz (400) aus den Kern/Hülle-Teilchen (300) durch eine elektrische Kurzschlussbrücke zwischen den beiden Anschlusskontakten (225, 226) der Antennen-Leiterbahn (220) und/oder zwischen den Kontaktstellen (215, 216) des Halbleiterchips (210) verursacht wird.

2. Wert- oder Sicherheitsprodukt (100) nach Anspruch 1, **dadurch gekennzeichnet, dass** die mindestens eine erste chemische Substanz (400) durch eine Metallpartikel enthaltende Flüssigkeit oder pastöse Masse und/oder durch eine ionische Flüssigkeit und/oder durch ein leitfähiges Polymer und/oder durch in einer Flüssigkeit dispergierte Kohlenstoffnanoröhren gebildet ist.

3. Wert- oder Sicherheitsprodukt (100) nach Anspruch 1, **dadurch gekennzeichnet, dass** die mindestens eine erste chemische Substanz (400) durch eine heterocyclische aromatische Verbindung gebildet ist und dass sich in einem die Kern/Hülle-Teilchen (300) umgebenden Materialbereich des Wert- oder Sicherheitsproduktes (100) mindestens ein Oxidationsmittel für die heterocyclische aromatische Verbindung als zweite chemische Substanz (500) befindet.

4. Wert- oder Sicherheitsprodukt (100) nach Anspruch 3, **dadurch gekennzeichnet, dass** die heterocyclische aromatische Verbindung ausgewählt ist aus der Gruppe, umfassend Pyrrol, Thiophen und deren Derivate, und dass mindestens ein Oxidationsmittel für die heterocyclische Verbindung ein Übergangsmetallsalz in einer Oxidationsstufe ist, das zu einer niedrigeren Oxidationsstufe reduzierbar ist.

5. Wert- oder Sicherheitsprodukt (100) nach Anspruch 1, **dadurch gekennzeichnet, dass** die mindestens eine erste chemische Substanz (400) durch eine zu Metall reduzierbare Metallionen enthaltende Lösung gebildet ist und dass sich in einem die Kern/Hülle-Teilchen (300) umgebenden Materialbereich des Wert- oder Sicherheitsproduktes (100) mindestens ein Reduktionsmittel für die Metallionen als zweite chemische Substanz (500) befindet.

6. Wert- oder Sicherheitsprodukt (100) nach Anspruch 5, **dadurch gekennzeichnet, dass** die Metallionen Silberionen sind und dass das Reduktionsmittel ein Oligosaccharid ist.

7. Wert- oder Sicherheitsprodukt (100) nach einem der vorstehenden Ansprüche, **dadurch gekennzeichnet, dass** sich die Kern/Hülle-Teilchen (300) in einer Schicht (350) in dem Wert- oder Sicherheitsprodukt (100) befinden, die sich benachbart zu und überlappend mit elektrischen Kontaktverbindungen (215, 216; 225, 226, 230) zwischen dem mindestens einen Schaltkreiselement (210) und der mindestens einen Leiterbahn (220) in dem Wert- oder Sicherheitsprodukt (100) befinden.

## Claims

1. Valuable product or security product (100) with at least one internal electrical circuit (250), which is formed by at least one semiconductor chip (210) and at least one spiral-shaped antenna conducting track (220) electrically connected to the at least one semiconductor chip (210), wherein the valuable product or security product (100) further contains core/shell particles (300) containing at least one first chemical substance (400), wherein the core/shell particles (300) are formed by a shell (310) and a core (320) surrounded by the shell (310), such that the at least one chemical substance (400) can be released by means of an action on the valuable product or security product (100), can reach the at least one electrical circuit (250) and there can at least impair the electrical functional capability of the electrical circuit (250) alone or after reaction with at least one second chemical substance (500), **characterized in that** the semiconductor chip (210) is placed in the form of a bridge over the spiral-shaped antenna conducting track (220), such that a first contact point (215) of the semiconductor chip (210) is connected to a first connection contact (225) of the antenna conducting track (220), and a second connection contact (216) of the semiconductor chip (210) is connected to a second connection contact (226) of the antenna conducting track (220), and that the impairment or suspension of the electrical functional capability of the electrical circuit (250), due to the release of the at least one first chemical substance (400) from the core/shell particles (300), is caused by an electrical short-circuit bridge between the two connection contacts (225, 226) of the antenna conducting track (220) and/or between the contact points (215, 216) of the semiconductor chip (210).

2. Value product or security product (100) according to claim 1, **characterized in that** the at least one first chemical substance (400) is formed by a liquid containing metal particles or by a paste-like compound and/or by an ionic liquid and/or by a conductive polymer and/or by carbon nanotubes dispersed in a liquid.

3. Value product or security product (100) according to claim 1, **characterized in that** the at least one first chemical substance (400) is formed by a heterocyclic aromatic compound, and that, in a material region of the value product or security product (100) surrounding the core/shell particles (300), at least one oxidation agent is present for the heterocyclic aromatic compound as the second chemical substance (500).

4. Value product or security product (100) according to claim 3, **characterized in that** the heterocyclic aromatic compound is selected from the group comprising pyrol, thiophene, and their derivatives, and that at least one oxidation agent for the heterocyclic bonding is a transition metal salt in an oxidation state which can be reduced to a lower oxidation state.

5. Value product or security product (100) according to claim 1, **characterized in that** the at least one first chemical substance (400) is formed by a solution containing metal ions which can be reduced to metal, and that in a material region of the value product or security product (100) surrounding the core/shell particles (300), at least one reduction agent for the metal ions is present as a second chemical substance (500).

6. Value product or security product (100) according to claim 5, **characterized in that** the metal ions are silver ions, and that the reduction agent is an oligosaccharide.

7. Value product or security product (100) according to any one of the preceding claims, **characterized in that** the core/shell particles (300) are present in a layer (350) in the value product or security product (100), which is adjacent to and overlapping with electrical contact connections (215, 216; 225, 226, 230), between the at least one circuit element (210) and the at least one conducting track (220) in the value product or security product (100).

## Revendications

1. Produit de valeur ou de sécurité (100) renfermant au moins un circuit électrique (250), qui est formé par au moins une puce semi-conductrice (210) et au moins une piste conductrice d'antenne (220) en forme de spirale électriquement reliée à l'au moins une puce semi-conductrice (210), dans lequel le produit de valeur ou de sécurité (100) contient en outre des particules de noyau/d'enveloppe (300) contenant au moins une première substance chimique (400), dans lequel les particules de noyau/d'enveloppe (300) sont formées par une enveloppe (310) ainsi que par un noyau (320) entouré par l'enveloppe (310), de sorte que l'au moins une première substance chimique (400) peut être libérée par une action sur le produit de valeur ou de sécurité (100), peut parvenir jusqu'à l'au moins un circuit électrique (250) et peut, seule ou en réaction avec au moins une seconde substance chimique (500), au moins y perturber la capacité de fonctionnement électrique du circuit électrique (250), **caractérisé en ce que** la puce semi-conductrice (210) est posée à la manière d'un pont au-dessus de la piste conductrice d'antenne en forme de spirale de sorte qu'un premier point de contact (215) de la puce semi-conductrice (210) est relié à un premier contact de branchement (225) de la piste conductrice d'antenne (220) et un second point de contact (216) de la puce semi-conductrice (210) est relié à un second contact de branchement (226) de la piste conductrice d'antenne (220) et **en ce que** la perturbation ou la suppression de la capacité de fonctionnement électrique du circuit électrique (250) est provoquée en raison de la libération de l'au moins une première substance chimique (400) des particules de noyau/d'enveloppe (300) par un pont électrique de court-circuit entre les deux contacts de branchement (225, 226) de la piste conductrice d'antenne (220) et/ou entre les points de contact (215, 216) de la puce semi-conductrice (210).

2. Produit de valeur ou de sécurité (100) selon la revendication 1, **caractérisé en ce que** l'au moins une première substance chimique (400) est formée par un liquide ou une masse pâteuse contenant des particules métalliques et/ou par un liquide ionique et/ou par un polymère conducteur et/ou par des nanotubes de carbone en dispersion dans un liquide.

3. Produit de valeur ou de sécurité (100) selon la revendication 1, **caractérisé en ce que** l'au moins une première substance chimique (400) est formée par un composé aromatique hétérocyclique et **en ce que**, dans une zone de matière du produit de valeur ou de sécurité (100) entourant les particules de noyau/d'enveloppe (300) se trouve au moins un moyen d'oxydation pour le composé aromatique hétérocyclique en tant que seconde substance chimique (500).

4. Produit de valeur ou de sécurité (100) selon la revendication 3, **caractérisé en ce que** le composé aromatique hétérocyclique est sélectionné dans le groupe comportant du pyrrole, du thiophène et leurs dérivés, et **en ce qu'**au moins un moyen d'oxydation pour le composé aromatique hétérocyclique est un sel de métal de transition dans un degré d'oxydation qui peut être réduit vers un degré d'oxydation inférieur.

5. Produit de valeur ou de sécurité (100) selon la revendication 1, **caractérisé en ce que** l'au moins une première substance chimique (400) est formée par une solution contenant des ions métalliques réductibles en un métal et **en ce que**, dans une zone de matière du produit de valeur ou de sécurité (100) entourant les particules de noyau/d'enveloppe (300) se trouve au moins un moyen de réduction pour les ions métalliques en tant que seconde substance chimique (500).

6. Produit de valeur ou de sécurité (100) selon la revendication 5, **caractérisé en ce que** les ions métalliques sont des ions d'argent et **en ce que** le moyen de réduction est un oligosaccharide.

7. Produit de valeur ou de sécurité (100) selon l'une quelconque des revendications précédentes, **caractérisé en ce que** les particules de noyau/d'enveloppe (300) se trouvent dans une couche (350) dans le produit de valeur ou de sécurité (100), et se trouvent dans le produit de valeur ou de sécurité (100) de façon adjacente ou chevauchant les liaisons de contact électriques (215, 216 ; 225, 226, 230) entre au moins un élément de circuit (210) et au moins une piste conductrice (220).
